# EUROPÄISCHE PATENTSCHRIFT

(11) **EP 4 061 704 B1**
(45) Veröffentlichungstag und Bekanntmachung des Hinweises auf die Patenterteilung: **10.09.2025**
(21) Anmeldenummer: 20816896.3
(22) Anmeldetag: 19.11.2020
(51) Int. Cl.: B64C 13/50

(54) **VORRICHTUNG, ANORDNUNG UND VERFAHREN FÜR DIE STEUERUNG UND REGELUNG EINES STELLSYSTEMS EINES FLUGZEUGS**
APPARATUS, ARRANGEMENT AND METHOD FOR CONTROLLING AND REGULATING AN AIRCRAFT ACTUATION SYSTEM
DISPOSITIF, SYSTEME ET PROCEDE DE COMMANDE ET DE CONTROLE D'UN SYSTEME D'ACTIONNEMENT D'AERONEF

(30) Priorität: 19.11.2019 DE 102019008153
(43) Veröffentlichungstag der Anmeldung: 28.09.2022
(73) Patentinhaber: Technische Universität Berlin, 10623 Berlin (DE)
(72) Erfinder: MEYER-BRÜGEL, Wolfram, 10551 Berlin (DE)
(74) Vertreter: Bittner, Thomas L.
(86) Internationale Anmeldenummer: PCT/DE2020/100980
(87) Internationale Veröffentlichungsnummer: WO 2021/098917

(56) Entgegenhaltungen:
- DE-A1- 102010 007 042
- DE-A1- 102010 026 162
- DE-A1- 102016 117 638

## Beschreibung

Die Erfindung betrifft eine Vorrichtung, eine Anordnung sowie ein Verfahren für die Steuerung und Regelung eines Stellsystems eines Flugzeugs.

### Hintergrund

Stellsysteme eines Flugzeugs sind beispielsweise Leitwerke, wie Höhenleitwerk, Seitenleitwerk und Querruder, mit Stellflächen zugeordneten Aktuatoren für das Bewegen der Stellflächen sowie Düsen, Propeller, Auftriebshilfen wie Wölbklappen, Störklappen (Spoiler) und Seitenkraftsteuerungen.

Herkömmlicherweise kommt bei Stellsystemen von Flugzeugen eine Kaskadenregelung zum Einsatz. Hierbei wird in einer äußeren Regelschleife, der Flugregelung, aus Zustandsgrößen des Flugzeugs bezüglich eines zu regelnden Freiheitsgrads als Stellgröße der Flugregelung eine Führungsgröße für die Regelung eines Aktuators bestimmt, welcher den betreffenden Freiheitsgrad steuert. So ist die Führungsgröße für die Aktuatorregelung im Falle einer Nicklageregelung eine Aktuatorauslenkung und somit ein Ausschlag des Höhenruders. Hierbei wird das Höhenruder üblicherweise mittels eines Aktuators, beispielsweise eines translatorischen, hydraulischen oder rotatorischen elektromagnetischen Aktuators bewegt, so dass die Führungsgröße einer Soll-Rotationsstellung des Aktuators entspricht. Die Aktuatorregelung mit der Führungsgröße als Eingangsgröße bildet eine innere Regelschleife. Im Falle eines rotatorischen elektromagnetischen Aktuators zur Bewegung einer Stellfläche eines Leitwerks handelt es sich insbesondere um eine sogenannte Servoregelung, bei der eine Drehgeschwindigkeit (Stellgeschwindigkeit) des Aktuators als Regelgröße einer inneren Regelschleife dient, wobei eine entsprechende Führungsgröße (Soll-Drehgeschwindigkeit) der inneren Regelschleife aus der Soll-Rotationsstellung bestimmt wird. Aus der Regelabweichung der inneren Regelschleife, also der Differenz zwischen der Soll-Drehgeschwindigkeit und der Ist-Drehgeschwindigkeit des Aktuators wird ein Aktuatorstrom für den Betrieb des Aktuators bestimmt. Zusätzlich kann eine weitere innere Regelschleife vorgesehen sein, bei welcher der Aktuatorstrom die Regelgröße ist und die Stellgröße eine Aktuatorspannung ist. Bei der Servoregelung kann eine Stellbeschleunigung des Aktuators berücksichtigt werden. Eine Messung von Beschleunigungen kann bei der Flugregelung zur Beobachtung oder als Ersatz für schlecht messbare Zustände vorgesehen sein.

In der Regel weist die Servoregelung im Vergleich zur Flugregelung eine deutlich schnellere Dynamik auf, so dass die Flugregelung die Gesamtdynamik des Regelungssystems begrenzt. Vor dem Hintergrund der rasant zunehmenden Verbreitung und Bedeutung unbemannter und / oder autonom operierender Flugobjekte ergeben sich jedoch neue Einsatzgebiete für Flugregelungstechnologien, die eine hochdynamische Regelung der Flugdynamik erfordern. Neben einer präzisen Bahnführung auf komplexen Trajektorien erfordern viele Mess- und Beobachtungsaufgaben eine erhöhte Lagestabilität und Flugruhe. Weiterhin ist in der Flugzeugentwicklung ein Trend zu effizienteren, aerodynamisch hochwertigen Konfigurationen festzustellen, die sich durch hohe Flügelstreckung und Spannweite auszeichnen. Insbesondere im Zusammenhang mit immer größeren, leichteren und damit elastischeren Strukturen und Verbünden, die eine regelungstechnische Reduktion von Strukturlasten und eine aktive Stabilisierung der vergleichsweise niederfrequenten strukturdynamischen Moden erfordern, können die Eigenfrequenzen die Dynamik der bekannten Regelungssysteme übersteigen.

In dem Dokument DE 10 2016 117 634 A1 ist vorgeschlagen, im Gegensatz zur bekannten Positionsregelung (Aktuatorauslenkung als Führungsgröße) auf einen Kraft- oder Momentengeregelten Ansatz umzustellen. Hierzu ist je Aktuator ein Kraft- / Momenten-Regler vorgesehen, mit dem der Aktuator basierend auf der zugeordneten Führungsgröße, nämlich einer Soll-Kraft, einer Soll-Kraftänderung, einem Soll-Moments oder einer Soll-Momentenänderung, und einer Regelgröße, nämlich einer vom Aktuator erzeugten Kraft oder eines vom Aktuator erzeugten Moments, geregelt wird. Hierbei wird die Regelgröße von einer Sensorvorrichtung ermittelt, die jeweils am oder im Aktuator oder im Triebstrang des jeweiligen Aktuators vorhanden ist. Die Regelgröße, bei einem Leitwerk also das Antriebsmoment, wird somit auf dem mechanischen Übertragungsweg zwischen der Krafterzeugung im Aktuator und der aerodynamischen Stellfläche gemessen. Dieses Antriebsmoment bewirkt eine Rotationsbeschleunigung der Stellfläche relativ zu dem Flugzeug. Gleichzeitig ist die Stellfläche durch die Luftkräfte einem aerodynamischen Ruderscharniermoment ausgesetzt. Im quasistationären Zustand besteht ein Gleichgewicht zwischen Antriebsmoment und aerodynamischem Ruderscharniermoment, so dass die Führungsgröße in diesem Fall dem Ruderscharniermoment entspricht. In der Folge reagieren die Steuerflächen aufgrund der Kraftregelung "nachgiebig" bzw. "elastisch" auf extern auf die Steuerfläche aufgebrachte Böenlasten. Gemäß dem in dem Dokument DE 10 2016 117 634 A1 vorgeschlagenen Ansatz wird auf eine zum Stellflächenausschlag proportionale Rückführung verzichtet.

Hierdurch ist eine Gestaltung der Systemdynamik gegenüber einer vollständigen Zustandsvektorrückführung beschränkt.

In dem Dokument DE 10 2016 117 638 A1 ist für ein derartiges Kraft- / Momenten-geregeltes System offenbart, durch eine entsprechende Über- oder Unterkompensation des Scharniermomentes den Einfluss einer Böe auf das Flugzeug zu minimieren. Hierbei wird der von einer Bö verursachte Kraft- / Momenten-Anteil ermittelt und der vorgegebene Soll-Wert für die Steuerkraft / das Steuermoment in Abhängigkeit von dem Böeneinfluss auf das Scharniermoment der Steuerfläche modifiziert. Ein zusätzlicher geschwindigkeitsproportionaler Dämpfungsterm soll die Schwingungsneigung der natürlichen Ruderwinkeldynamik (Ruderflattern) reduzieren. Gemäß einer Ausgestaltung können Stellposition (Aktuatorauslenkung) und Stellgeschwindigkeit zurückgeführt werden, wobei dies nicht in Form einer Kaskade, sondern als direkte, voneinander unabhängige Rückführungen erfolgt.

Das Dokument DE 10 2010 007 042 A1 beschreibt ein Flugzeug mit Tragflügeln, die jeweils einen Hauptflügel und zumindest eine gegenüber diesem verstellbar angeordneten Steuerklappe aufweisen, und mit einem Hochauftriebssystem mit zumindest einer Einstellklappe zur Einstellung des Auftriebs der Tragflügel zur Einstellung des Auftriebszustands des Flugzeugs, aufweisend zumindest eine Anordnung von Strömungsbeeinflussungs-Vorrichtungen zur Beeinflussung des das Oberflächensegment überströmenden Fluids, eine mit den Stellantrieben und den Strömungsbeeinflussungs-Vorrichtungen funktional verbundene Ansteuerungsvorrichtung zur Kommandierung derselben, um die Einstellklappe zu verstellen und/oder das Maß der durch die Strömungsbeeinflussungs-Vorrichtungen bewirkten Strömungsbeeinflussung einzustellen, eine mit der Ansteuerungsvorrichtung in Verbindung stehende Strömungsbeeinflussungs-Vorgabevorrichtung zur Erzeugung von Soll-Kommandos für die Einstellung des Auftriebszustands des Flugzeugs. Die Ansteuerungsvorrichtung ist derart ausgeführt, dass diese aufgrund von Soll-Kommandos der Strömungsbeeinflussungs-Vorgabevorrichtung Kommandos für die Stellantriebsvorrichtung und den Strömungsbeeinflussungs-Vorrichtungen erzeugt, um die Einstellklappe zu verstellen und/oder das Maß der durch die Strömungsbeeinflussungs-Vorrichtungen bewirkten Strömungsbeeinflussung zur Einstellung des Auftriebszustands des Flugzeugs einzustellen.

Das Dokument DE 10 2010 026 162 A1 betrifft ein Flugzeug mit Tragflügeln und einem System zur Minimierung des Einflusses von instationären Anströmzuständen. Die Tragflügel sind jeweils aus einem Hauptflügel und zumindest einer gegenüber diesem verstellbar angeordneten Steuerklappe, einem Stellantrieb zur Betätigung der zumindest einen Steuerklappe sowie einer Sensorvorrichtung zur Erfassung der Stellposition der Steuerklappe gebildet. Das System zur Minimierung des Einflusses von instationären Anströmzuständen weist zumindest eine jeweils in zumindest einem sich in Flügelspannweiten-Richtung erstreckenden Oberflächensegment des Hauptflügels jedes Tragflügels und/oder zumindest einer Steuerklappe gelegene Anordnungen von Strömungsbeeinflussungs-Vorrichtungen zur Beeinflussung des das Oberflächensegment überströmenden Fluids, die funktional mit der Flugregelsteuerungsvorrichtung verbunden sind, eine Detektionseinrichtung zur Detektion von auf das Flugzeug wirkenden instationären Anströmzuständen und eine funktional mit den Strömungsbeeinflussungs-Vorrichtungen verbundene Ansteuerungsfunktion zur Beeinflussung der Strömung in den verschiedenen Segmenten eines Tragflügels auf, die derart ausgeführt ist, dass diese aufgrund der von der Detektionseinrichtung detektierten instationären Anströmzustände und der von der Sensorvorrichtung erfassten Stellposition der Steuerklappe die Strömungsbeeinflussungs-Vorrichtungen derart ansteuert, dass der Einfluss von instationären Anströmzuständen auf das Flugzeug minimiert wird.

### Zusammenfassung

Aufgabe der Erfindung ist es, neue Technologien für die Steuerung und Regelung eines Stellsystems eines Flugzeugs anzugeben, die insbesondere eine schnelle und präzise Regelung bei einer Berücksichtigung verschiedener Einflussfaktoren auf das Flugverhalten erlauben.

Zur Lösung der Aufgabe sind eine Vorrichtung für die Steuerung und Regelung eines Stellsystems eines Flugzeugs nach dem unabhängigen Anspruch 1 sowie eine Anordnung und ein Verfahren für die Steuerung und Regelung eines Stellsystems eines Flugzeugs nach weiteren Ansprüchen geschaffen.

Gemäß einem Aspekt ist eine Vorrichtung für die Steuerung und Regelung eines Stellsystems eines Flugzeugs bereitgestellt. Die Vorrichtung ist gebildet mit einer ersten Eingangsschnittstelle, welche eingerichtet ist, eine Führungsgröße angebende erste Eingangsdaten zu empfangen, einer zweiten Eingangsschnittstelle, welche eingerichtet ist, eine Regelgröße angebende zweite Eingangsdaten zu empfangen, und einem Steuerausgang, welcher eingerichtet ist ein Steuersignal auszugeben, welches eine Stellgröße für ein Stellsystems eines Flugzeugs angibt, welches mittels des Stellsystems zu steuern ist. Die Führungsgröße gibt eine Soll-Beschleunigung an einem Punkt des Flugzeugs an, welches mittels des Stellsystems zu steuern ist, und die Regelgröße gibt eine Ist-Beschleunigung des Flugzeugs an dem Punkt an. Die Vorrichtung ist eingerichtet, unter Berücksichtigung der Führungsgröße und der Regelgröße, insbesondere aus der Differenz zwischen der Führungsgröße und der Regelgröße, die Stellgröße zu bestimmen und das der Stellgröße entsprechende Steuersignal über den Steuerausgang auszugeben.

Gemäß einem weiteren Aspekt ist eine Anordnung für die Steuerung und Regelung eines Stellsystems eines Flugzeugs geschaffen. Die Anordnung ist mit einem Flugzeug, einer Flugregelungs-Vorrichtung mit einer Ausgangsschnittstelle und einer offenbarungsgemäßen Vorrichtung für die Steuerung und Regelung eines Stellsystems eines Flugzeugs gebildet. Das Flugzeug weist ein Stellsystem, welches eingerichtet ist, das Flugzeug in wenigstens einem Freiheitsgrad zu steuern, und einen Beschleunigungssensor auf, welcher an einem Punkt des Flugzeugs angeordnet ist. Die Flugregelungs-Vorrichtung ist eingerichtet, aus einem Flugzustand des Flugzeugs die Führungsgröße zu berechnen, welche eine Soll-Beschleunigung an dem Punkt des Flugzeugs angibt, und über die Ausgangsschnittstelle die Führungsgröße angebende erste Eingangsdaten an die erste Eingangsschnittstelle der Vorrichtung zu senden. Der Beschleunigungssensor ist eingerichtet, die lokale Beschleunigung des Flugzeugs an dem Punkt zu messen und die Regelgröße angebende zweite Eingangsdaten an die zweite Eingangsschnittstelle der Vorrichtung zu senden, welche die lokale Beschleunigung an dem Punkt angeben. Das Stellsystem ist eingerichtet, die Stellgröße von dem Steuerausgang der Vorrichtung zu empfangen und eine der Stellgröße entsprechende Stellbewegung auszuführen.

Gemäß noch einem Aspekt ist ein Verfahren zur Steuerung und Regelung eines Stellsystems eines Flugzeugs bereitgestellt. Das Verfahren umfasst die Schritte des Bereitstellens einer Vorrichtung für die Steuerung und Regelung eines Stellsystems eines Flugzeugs, des Erzeugens von eine Führungsgröße angebenden ersten Eingangsdaten, wobei die Führungsgröße eine Soll-Beschleunigung an einem Punkt des Flugzeugs angibt, welches mittels des Stellsystems zu steuern ist, des Erzeugens von eine Regelgröße angebenden zweiten Eingangsdaten, wobei die Regelgröße eine Ist-Beschleunigung des Flugzeugs an dem Punkt angibt, des Empfangens der ersten Eingangsdaten an einer ersten Eingangsschnittstelle der Vorrichtung, des Empfangens der zweiten Eingangsdaten an einer zweiten Eingangsschnittstelle der Vorrichtung, des Bestimmens einer Stellgröße für ein Stellsystem des Flugzeugs unter Berücksichtigung der Führungsgröße und der Regelgröße, insbesondere aus der Differenz zwischen der Führungsgröße und der Regelgröße, und des Ausgebens eines die Stellgröße angebenden Steuersignals über einen Steuerausgang der Vorrichtung.

Bei dem Stellsystem kann es sich beispielsweise um ein Leitwerk und einen Aktuator für das Betreiben des Leitwerks handeln. Hierbei kann der Aktuator das System zum Erzeugen einer Stellkraft bzw. eines Stellmoments ohne ein zugehöriges Regelungssystem sein. Alternativ kann der Aktuator eine Regelung aufweisen, insbesondere eine Servoregelung. Das Leitwerk kann einen feststehenden, also relativ zu dem Flugzeug unbeweglichen, Teil (Auftriebsfläche) und eine bewegliche Stellfläche umfassen, die je nach ihrer Stellung relativ zu dem feststehenden Teil eine gewünschte steuernde Wirkung auf das Flugzeug ausübt. Hierbei kann der Aktuator ein rotatorischer elektromagnetischer Aktuator sein, also beispielsweise ein Elektromotor, der die Stellfläche relativ zu dem feststehenden Teil des Leitwerks rotiert. Das Leitwerk kann ein Höhenleitwerk, ein Seitenleitwerk oder ein Querruder sein. Alternativ kann das Stellsystem beispielsweise eine Wölbklappe zur Steuerung des Hubs des Flugzeugs, ein Spoiler zur Längssteuerung des Flugzeugs oder eine Seitenkraftsteuerung zur Quersteuerung des Flugzeugs sein. Weitere Beispiele für das Stellsystem umfassen eine Düse und einen Propeller des Flugzeugs.

Eine Beschleunigung des Flugzeugs im Sinne der Offenbarung ist eine Beschleunigung des Flugzeugs als solches und folglich beispielsweise nicht eine Stellbeschleunigung eines einzelnen in dem Flugzeug angeordneten Aktuators. Insbesondere kann eine Beschleunigung des Flugzeugs eine Beschleunigung eines relativ zu dem Flugzeug beweglich an dem Flugzeug angeordneten Elementes, beispielsweise eine Stellfläche eines Leitwerks, ausschließen, welche eine Beschleunigung relativ zu dem Flugzeug beinhaltet.

Zum Beispiel kann die Beschleunigung des Flugzeugs eine Beschleunigung an einem Schwerpunkt des Flugzeugs oder eine Beschleunigung an einem feststehenden Teil eines Leitwerks (Flosse), Flügels oder Rumpf sein. Die Beschleunigung des Flugzeugs kann beispielsweise die Beschleunigung an einem Punkt sein, der in der Nähe einer Stellfläche, insbesondere derjenigen Stellfläche, welche durch den Aktuator gesteuert wird, vorliegt. Die Beschleunigung des Flugzeugs kann insbesondere auch eine Beschleunigung an einem relativ zur Flugzeugstruktur unbeweglichen Teil des Aktuators selbst sein, beispielsweise dem Gehäuse, einer Grundplatte, einer Platine der Steuerelektronik oder einem anderen unbeweglichen Teil des Aktuators. In einer solchen Ausführung kann die Systemintegration vereinfacht und eine unabhängige Produktion durch Hersteller von Systemkomponenten ermöglicht sein.

Die Beschleunigung des Flugzeugs kann insbesondere eine Beschleunigung des Flugzeugs als solchem mit Bezug zu einem Inertialsystem oder globalen Koordinatensystem sein. Die Beschleunigung des Flugzeugs kann den Einfluss des Erdschwerefeldes und/oder aber eine Kompensation desselben beinhalten. Die Beschleunigung des Flugzeugs kann eine translatorische Beschleunigung, eine Drehbeschleunigung oder eine Beschleunigung sein, die translatorische und rotatorische Anteile enthält.

Mit einer Ist-Beschleunigung des Flugzeugs an dem Punkt ist somit eine Regelgröße bereitgestellt, welche nicht nur vom Stellausschlag des Stellsystems (also beispielsweise einer Stellung einer Stellfläche eines Leitwerks beziehungsweise einer rotatorischen oder translatorischen Stellung eines die Stellfläche bewegenden Aktuators) abhängt, sondern bereits weitere äußere Einflüsse, insbesondere Einflüsse von Windböen und / oder verschiedenen Flugzustandsgrößen wie Fluggeschwindigkeit, Strömungswinkel und Drehraten enthält, die einen Anteil an der aerodynamischen Krafterzeugung haben. Hierdurch kann eine Unterdrückung von Störeinflüssen (Böen) in einer inneren, dynamischeren Regelschleife ermöglicht sein. Es kann eine Regelung bereitgestellt sein, die unempfindlicher gegenüber spezifischen aerodynamischen bzw. aeroelastischen Eigenschaften des Flugzeugs ist (Robustheit). Weiterhin kann eine einfachere und standardisiertere Struktur der Flugregelung und eine agilere und präzisere Bahnführung ermöglicht sein.

Die Vorrichtung kann mit einer dritten Eingangsschnittstelle gebildet sein, welche eingerichtet ist, eine Stellsystem-Regelgröße angebende dritte Eingangsdaten zu empfangen. Hierbei ist die Vorrichtung eingerichtet, unter Berücksichtigung der Führungsgröße und der Regelgröße eine Stellsystem-Führungsgröße zu bestimmen und unter Berücksichtigung der Stellsystem-Führungsgröße und der Stellsystem-Regelgröße die Stellgröße zu bestimmen.

Die Stellsystem-Führungsgröße kann eine Soll-Stellgeschwindigkeit des Stellsystems und die Stellsystem-Regelgröße kann eine Ist-Stellgeschwindigkeit des Stellsystems sein. Beispielsweise können die Stellsystem-Führungsgröße und die Stellsystem-Regelgröße eine Soll-Drehgeschwindigkeit (Soll-Drehrate) und eine Ist-Drehgeschwindigkeit eines Aktuators des Stellsystems sein, zum Beispiel eines Aktuators, der eine Stellfläche eines Leitwerks bewegt. Hierbei kann die Stellgröße eine Größe sein, welche eine Bewegung des Aktuators bewirkt, im Falle eines elektromagnetischen Aktuators insbesondere ein Aktuatorstrom.

Alternativ kann für einen Aktuator des Stellsystems unter Berücksichtigung der Stellsystem-Führungsgröße und der Stellsystem-Regelgröße eine Aktuator-Führungsgröße, zum Beispiel ein Soll-Aktuatorstrom, bestimmt werden. Unter Berücksichtigung der Aktuator-Führungsgröße und einer Aktuator-Regelgröße, beispielsweise einem Ist-Aktuatorstrom, kann die Stellgröße bestimmt werden, bei der es sich insbesondere um eine AktuatorSpannung, beispielsweise eine Klemmenspannung eines Gleichstrommotors oder die Querspannungskomponente im Falle der feldorientierten Regelung eines elektronische kommutierten Motors, handeln kann. Für das Empfangen der Aktuator-Regelgröße kann die Vorrichtung eine entsprechende Eingangsschnittstelle aufweisen. Die Aktuatorregelung bzw. Servoregelung kann weitere Regelungsstrukturen aufweisen, insbesondere unterhalb einer Stellgeschwindigkeits-Regelung, welche als solches bekannt sind.

Allgemein umfasst das Bestimmen einer Stellgröße, gegebenenfalls einer untergeordneten Stellgröße in einer untergeordneten Regelungsstruktur, unter Berücksichtigung von Größen, welche vorgegeben werden, also als Führungsgröße dienen, und Größen, welche zurückgeführt werden, also als Regelgrößen dienen, ein Bestimmen der Stellgröße nach regelungstechnischem Verständnis. Insbesondere können Kaskadenstrukturen gebildet sein, bei denen eine Regelabweichung als Differenz aus einer Führungsgröße und einer Regelgröße, welche gegebenenfalls als zusammengesetzte Regelgröße aus mehreren Regelgrößen bestimmt sein kann, mit einem Proportionalitätsfaktor multipliziert wird, um die Stellgröße zu bestimmen. Alternativ oder zusätzlich kann eine parallele Rückführung vorgesehen sein, bei der eine oder mehrere Regelgrößen mit einer jeweiligen Anpassung, beispielsweise Verstärkung und/oder Integration, zurückgeführt werden und mittels Addition oder Subtraktion mit einer Führungsgröße verrechnet werden, welche mittels eines Vorfilters den rückgeführten Regelgrößen entsprechend modifiziert wurde, insbesondere zur Kompensation eines statischen Fehlers zwischen der Führungsgröße und der einen oder mehreren Regelgrößen.

Die Vorrichtung kann eingerichtet sein, zur Bestimmung der Stellgröße eine, mehrere oder alle der folgenden Operationen auszuführen: Bestimmen einer (Soll-) Stellgeschwindigkeit (Stellgröße oder Stellsystem-Führungsgröße) mittels Multiplikation einer Differenz zwischen einer Soll-Beschleunigung (Führungsgröße) und einer Ist-Beschleunigung (Regelgröße) mit einem ersten Proportionalitätsfaktor; Bestimmen eines (Soll-) Aktuatorstroms (Stellgröße oder Aktuator-Führungsgröße) mittels Multiplikation einer Differenz zwischen einer Soll-Stellgeschwindigkeit (Stellsystem-Führungsgröße) und einer Ist-Stellgeschwindigkeit (Stellsystem-Regelgröße) mit einem zweiten Proportionalitätsfaktor; und Bestimmen einer (Soll-) Aktuatorspannung (Stellgröße) mittels Multiplikation einer Differenz zwischen einem Soll-Aktuatorstrom (Aktuator-Führungsgröße) und einem Ist-Aktuatorstrom (Aktuator-Regelgröße) mit einem dritten Proportionalitätsfaktor.

Die Aktuatorspannung kann die Stellgröße der Regelung sein. Die Aktuatorspannung kann entsprechend der Stellgröße eingestellt werden und die Reaktion des Stellsystems hierauf, insbesondere eine Bewegung des Stellsystems und das Einnehmen einer Position des Stellsystems, kann sich hieraus aufgrund der physischen und physikalischen System-Gegebenheiten Systems, insbesondere des Stellsystems in Verbindung mit dem System Flugzeug, ergeben.

Alternativ kann der Aktuatorstrom die Stellgröße der Regelung sein. In diesem Fall kann dem Aktuator ein Soll-Aktuatorstrom entsprechend der Stellgröße vorgegeben werden, wobei keine Rückführung eines Ist-Aktuatorstroms erfolgt. Hierbei kann der Aktuator eingerichtet sein, eine Stromvorgabe in eine entsprechende Spannung umzusetzen, um die Stromvorgabe zu erreichen. Hierbei kann der Aktuator eine interne Regelung aufweisen, welche beispielsweise den Strom als Führungs- und Regelgröße und die Spannung als Stellgröße nutzt. Dass der Aktuatorstrom die Stellgröße der Regelung ist, kann insbesondere vorgesehen sein, wenn der Aktuator eine Stromvorgabe mit einer ausreichenden Dynamik umsetzt, so dass eine gemäß der betreffenden Anwendung, insbesondere des Flugzeug-Typs, ausreichend dynamische Regelung des Stellsystems ermöglicht ist, ohne dass eine Stromregelung durch die Vorrichtung erfolgt.

Die Vorrichtung kann für einen Betrieb frei von einer Berücksichtigung einer Stellbeschleunigung des Stellsystems, insbesondere frei von einer Berücksichtigung einer Stellbeschleunigung eines Aktuators, beispielsweise frei von einer Berücksichtigung einer Rotations- oder Drehbeschleunigung eines rotatorischen elektromagnetischen Aktors für die Bewegung einer Stellfläche eines Leitwerks, eingerichtet sein. Insbesondere kann das Bestimmen der Stellgröße frei von einer Berücksichtigung einer Stellbeschleunigung erfolgen. Während Stellbeschleunigung dem Stellmoment, insbesondere dem Antriebsmoment eines Aktuators, proportional ist, kann die Beschleunigung des Flugzeugs an dem Punkt proportional einer Stellposition des Stellsystems sein. Zum Beispiel kann eine lokale Beschleunigung an dem unbeweglichen Teil eines Leitwerks, also an der Auftriebsfläche, proportional zum Stellflächenwinkel und einer durch diesen erzeugten Auftriebskraft sein. Innerhalb des geregelten Systems können insbesondere zwei Integrationsstufen zwischen eines Stellbeschleunigung und einer Beschleunigung des Flugzeugs liegen. Durch die Rückführung der Beschleunigung des Flugzeugs, also der Nutzung der Beschleunigung des Flugzeugs als Regelgröße, kann es ermöglicht sein, die Systemdynamik in ähnlicher Weise zu beeinflussen, wie bei einer Rückführung einer Stellposition, beispielsweise eines Stellflächenwinkels.

Die Vorrichtung kann eingerichtet sein, die Stellgröße frei von einer Berücksichtigung einer Ist-Stellposition des Stellsystems und frei von einem Bestimmen einer Soll-Stellposition des Stellsystems zu bestimmen. Hierbei kann eine Stellposition des Stellsystems insbesondere eine Aktuator-Stellposition sein, beispielsweise eine Rotationsposition oder eine translatorische Position eines Aktuators zur Bewegung der Stellfläche eines Leitwerks bzw. die dieser Position entsprechende Stellung der Stellfläche des Leitwerks.

Alternativ kann vorgesehen sein, dass die Vorrichtung eingerichtet ist, die Stellgröße frei von einem Bestimmen einer Soll-Stellposition des Stellsystems zu bestimmen, jedoch eine Ist-Stellposition des Stellsystems zu berücksichtigen.

Beispielsweise kann die Ist-Stellposition im Rahmen einer Begrenzung des Bewegungsraums des Stellsystems berücksichtigt werden. Hierbei kann die Stellgröße modifiziert werden, wenn eine Prüfung ergibt, dass die Stellgröße zu einer Stellbewegung aus einem vorgegebenen Bewegungsraum des Stellsystems heraus führen würde, derart, dass die Stellbewegung an der Grenze des Bewegungsraums endet. Auf diese Weise kann insbesondere eine Stellbewegung bereitgestellt sein, welche der Funktion einer Abschaltung bei Erreichen eines Endschalters entspricht. In diesem Fall kann die Stellgröße im Übrigen frei von einer Berücksichtigung einer Ist-Stellposition des Stellsystems und frei von einem Bestimmen einer Soll-Stellposition des Stellsystems bestimmt werden.

Alternativ oder zusätzlich kann die Ist-Stellposition zurückgeführt werden, zum Beispiel, um Zustände der instationären Aerodynamik oder Elastizitäten und Hysterese im Antriebsstrang zu beobachten, um eine weitere Steigerung der Dynamik der Regelung zu ermöglichen, wobei die Stellgröße frei von einem Bestimmen einer Soll-Stellposition des Stellsystems zu bestimmt wird.

Die Vorrichtung kann eine weitere Eingangsschnittstelle aufweisen, welche eingerichtet ist, eine weitere Regelgröße angebende weitere Eingangsdaten zu empfangen. Hierbei kann die weitere Regelgröße eine Ist-Beschleunigung des Flugzeugs an einem weiteren Punkt angeben und die Vorrichtung kann eingerichtet sein, die Regelgröße unter Berücksichtigung der weiteren Regelgröße anzupassen und anschließend die Stellgröße unter Berücksichtigung der Führungsgröße und der Regelgröße zu bestimmen. Eine Anpassung der Regelgröße mittels der weiteren Regelgröße kann beispielsweise eine Addition der weiteren Regelgröße zu der Regelgröße umfassen. Es können zusätzliche Regelgrößen empfangen und entsprechend zur Anpassung der Regelgröße genutzt werden.

Hiermit kann ermöglicht sein, die Stellgröße anhand einer Regelgröße zu bestimmen, welche eine Beschleunigung an einem Punkt des Flugzeugs angibt, an dem keine Beschleunigungsmessung erfolgt, wobei die Beschleunigung aus den Beschleunigungen an wenigstens zwei anderen Punkten des Flugzeugs bestimmt ist, an denen eine Beschleunigungsmessung erfolgt. Hiermit kann eine virtuelle Beschleunigungsmessung an einem Messpunkt bereitgestellt sein, der von dem Punkt und dem weiteren Punkt des Flugzeugs verschieden ist. Insbesondere kann ermöglicht sein, mit einer begrenzten Anzahl an Beschleunigungssensoren an verschiedenen Punkten eines Flugzeugs, welche zumindest teilweise bereits zu anderen Zwecken an oder in dem Flugzeug angeordnet sein können, Beschleunigungen an unterschiedlichen Punkten des Flugzeugs und / oder in unterschiedlichen Freiheitsgraden zu bestimmen. Diese können für die Steuerung und Regelung von Stellsystemen für unterschiedliche Freiheitsgrade des Flugzeugs, beispielsweise Höhenleitwerk, Seitenleitwerk und Querruder, als Regelgröße in mehreren offenbarungsgemäße Vorrichtungen dienen, die einem jeweiligen Stellsystem zugeordnet sind. Es können für ein als starr zu betrachtendes Flugzeug sechs Beschleunigungsmessungen an mindestens drei verschiedenen Punkten und in mindestens drei unterschiedliche Richtungen vorgesehen sein, um Beschleunigungen an beliebigen Punkten des Flugzeugs zu bestimmen.

Allgemein kann die mit der Regelgröße angegebene Beschleunigung aus mehreren Messungen bestimmt sein. Hierbei können die einzelnen Messungen von einer Beschleunigung unterschiedliche Messgrößen bestimmen, um auf die Beschleunigung gemäß der Regelgröße zu schließen. Beispielsweise kann eine Rollbeschleunigung, insbesondere um einen Schwerpunkt des Flugzeugs, aus zwei Vertikalbewegungen der Tragflächen bestimmt werden, wobei die Vertikalbewegung mittels entsprechender Sensoren gemessen werden.

Komponenten der Vorrichtung können als separate Vorrichtungen bereitgestellt sein. Alternativ können einzelne oder alle Komponenten der Vorrichtung als virtuelle Komponenten einer physischen Komponenten bereitgestellt sein. Als separate physische Vorrichtungen ausgebildete Komponenten der Vorrichtung können zusammenhängend montiert oder voneinander getrennt ausgebildet sein.

Die Führungsgröße kann in einem vorgelagerten Regelungsvorgang bestimmt sein, insbesondere in einer Flugregelungs-Vorrichtung. Hierbei kann der vorgelagerte Regelungsvorgang mit einer deutlich geringeren Taktrate arbeiten, als die nachgelagerte Stellsystem-Regelung (Servoregelung).

Mit Bezug auf die Anordnung kann die Flugregelungs-Vorrichtung eingerichtet sein, die Führungsgröße unter Berücksichtigung einer direkt kinematisch aus einer Soll-Trajektorie des Flugzeugs bestimmten Steuergröße zu berechnen.

Es kann vorgesehen sein, die Führungsgröße abhängig von einem Ist-Flugzustand des Flugzeuges und einem Soll-Flugzustand des Flugzeuges zu berechnen, insbesondere aus einer Abweichung oder Differenz zwischen Ist-Flugzustand und Soll-Flugzustand. Vorzugsweise kann die Führungsgröße zusätzlich eine Vorsteuerung beinhalten, welche direkt aus dem Soll-Flugzustand und unabhängig vom Ist-Flugzustand berechnet wird.

Ein Flugzustand kann durch eine oder mehrere physikalische Größen oder Messwerte derselben gegeben sein, die das dynamische Verhalten des Flugzeuges vollständig oder teilweise charakterisieren oder die die Bestimmung solcher charakterisierenden Größen (z.B. mit Hilfe eines Beobachters) zulassen. Ein Flugzustand kann insbesondere auch Größen umfassen, die im regelungstechnischen Zusammenhang als Ausgangsgrößen bezeichnet werden.

Ein Soll-Flugzustand kann beispielsweise in Form von zeitlichen Verläufen oder konstanten Werten für die zur Beschreibung des Flugzustandes verwendeten physikalischen Größen gegeben sein. Alternativ oder zusätzlich kann ein Soll-Flugzustand in Form einer Soll-Trajektorie des Flugzeugs gegeben sein. In diesem Fall kann eine Bestimmung einer in der Führungsgröße enthaltene Vorsteuerung auf besonders einfache Weise ermöglicht sein, indem die Beschleunigung an einem Ort des Flugzeugs mithilfe bekannter kinematischer Zusammenhänge aus der Soll-Trajektorie ermittelt wird.

Eine Soll-Trajektorie des Flugzeugs kann beispielsweise eine Linie sein, die den gewünschten Positionsverlauf des Flugzeugschwerpunktes in der einer Flughöhe entsprechenden Ebene oder im dreidimensionalen Raum beschreibt. Sie kann zusätzlich eine zeitliche Zuordnung der Positionen beinhalten, also eine Linie in einem vierdimensionalen Raum beschreiben. Weiterhin kann die Soll-Trajektorie eine gewünschte zeitliche oder örtliche Abhängigkeit der Flugzeuglage beschreiben, welche beispielsweise durch ein oder mehrere Winkel, Drehmatrizen oder Quaternionen dargestellt sein kann. Die Solltrajektorie kann sich auf ein beliebiges, vorzugsweise zumindest annähernd inertiales Koordinatensystem beziehen. Beispielsweise kann das Koordinatensystem ein erdfestes Koordinatensystem sein oder ein Koordinatensystem, welches mit der das Flugzeug umgebenden Luftmasse mitbewegt ist. Die Winkel können absolute Winkel sein oder Winkel die sich auf die Richtung der Flugbahn beziehen.

Das Stellsystem kann mit einem Aktuator gebildet sein, welcher eine Stellfläche eines Leitwerks des Flugzeugs bewegt. Das Leitwerk kann einen feststehenden, also relativ zu dem Flugzeug unbeweglichen, Teil (Auftriebsfläche) und eine bewegliche Stellfläche umfassen, die je nach ihrer Stellung relativ zu dem feststehenden Teil eine gewünschte steuernde Wirkung auf das Flugzeug ausübt. Hierbei kann der Aktuator ein rotatorischer oder translatorischer elektromagnetischer Aktuator sein, also beispielsweise ein Elektromotor, der die Stellfläche relativ zu dem feststehenden Teil des Leitwerks rotiert. Alternativ kann ein anderer Aktuatortyp vorgsehen sein, beispielsweise ein hydraulischer oder elektro-hydraulischer Aktuator insbesondere mit einem oder mehreren hydraulischen Zylindern. Das Leitwerk kann ein Höhenleitwerk, ein Seitenleitwerk oder ein Querruder sein. Bei einem rotatorischen Aktuator kann für Ausgestaltungen, in denen die Vorrichtung eingerichtet ist, die Differenz zwischen einer Stellsystem-Führungsgröße und einer Stellsystem-Regelgröße zu bestimmen, die Stellsystem-Führungsgröße eine Soll-Drehgeschwindigkeit (Drehrate) sein und die Stellsystem-Regelgröße kann eine Ist-Drehgeschwindigkeit sein.

Der Beschleunigungssensor kann insbesondere an einem relativ zu dem Flugzeug unbeweglichen Teil des Leitwerks angeordnet sein. Somit ist die Anordnung eingerichtet, eine Regelung auf Basis einer lokalen Beschleunigung an dem Leitwerk des Flugzeugs als Gesamtsystem bereitzustellen, wobei eine Beschleunigung der Stellfläche des Leitwerks relativ zu dem Flugzeug, insbesondere relativ zu dem unbeweglichen Teil des Leitwerks, nicht erfasst wird und somit nicht in die Regelung einfließt. Ein unbeweglicher Teil eines Leitwerks kann beispielsweise die Flosse eines Höhen- oder Seitenleitwerks oder, im Falle von Querruder, Wölbklappen oder Spoilern, der Flügel sein. Ein unbeweglicher Teil des Leitwerks kann auch ein Teil der Stellfläche selbst sein, sofern die dort gemessene Beschleunigung im Wesentlichen, also unter für die Regelung hinreichender Näherung, die Beschleunigung des Flugzeugs als Gesamtsystem reflektiert und die durch die Stellbewegung selbst hervorgerufene Relativbeschleunigung nur einen untergeordneten Einfluss hat. Beispielsweise kann dies eine Beschleunigungsmessung auf oder nahe der Ruderscharnierachse oder ein Einbauort eines Aktuators sein. Dies kann insbesondere für ein Pendelruder vorgesehen sein, bei dem es keine Trennung zwischen Flosse und Klappe gibt, sondern das gesamte Leitwerk verstellt wird.

Alternativ kann die Anordnung mit einem Stellsystem einer anderen Art gebildet sein. Zum Beispiel kann das Stellsystem eine Düse des Flugzeugs, ein Propeller des Flugzeugs, eine Wölbklappe, ein Spoiler, eine Seitenkrafsteuerung oder ein anderes Stellsystem des Flugzeugs sein, wobei das Stellsystem jedenfalls mittels der Vorrichtung regelbar und eingerichtet ist, zur Steuerung des Flugzeugs in mindestens einem Freiheitsgrad des Flugzeugs zu wirken.

Die Anordnung kann mit einem weiteren Beschleunigungssensor gebildet sein, welcher an einem weiteren Punkt des Flugzeugs angeordnet ist. Hierbei ist die Vorrichtung eine Vorrichtung mit einer weiteren Eingangsschnittstelle, welche eingerichtet ist, eine weitere Regelgröße angebende weitere Eingangsdaten zu empfangen. Der weitere Beschleunigungssensor ist eingerichtet, die lokale Beschleunigung an dem weiteren Punkt zu messen und die weitere Regelgröße angebende weitere Eingangsdaten an die weitere Eingangsschnittstelle der Vorrichtung zu senden, welche die lokale Beschleunigung an dem weiteren Punkt angeben. Mittels des Beschleunigungssensors und des weiteren Beschleunigungssensors kann eine virtuelle Beschleunigungsmessung an einem Messpunkt bereitgestellt sein, der von dem Punkt und dem weiteren Punkt des Flugzeugs verschieden ist. Hierbei können die vorangehend mit Bezug zu der Vorrichtung erläuterten Ausgestaltungen bezüglich der virtuellen Beschleunigungsmessung entsprechend vorgesehen sein. Die Anordnung kann mehrere weitere Beschleunigungssensoren aufweisen, wobei die Vorrichtung eine entsprechende Anzahl an Eingangsschnittstellen aufweist und mittels der Beschleunigungssensoren eine oder mehrere virtuelle Beschleunigungsmessungen an einem oder mehreren Punkten bereitgestellt sein kann, die jeweils von den Punkten verschieden sind, an denen die Beschleunigungssensoren angeordnet sind.

Die Anordnung kann zusätzlich weitere Sensoren aufweisen, die keine Beschleunigungssensoren sind. Alternativ oder zusätzlich kann ein Beschleunigungssensor mit mehreren Sensoren gebildet sein, welche jeweils eine andere Größe als eine Beschleunigung gemessen wird, wobei der Beschleunigungssensor die Beschleunigung aus den Größen der Sensoren bestimmt. Zum Beispiel kann ein Beschleunigungssensor mit wenigstens zwei Sensoren zu Erfassung einer Vertikalbewegung an den Tragflächen des Flugzeugs gebildet sein, wobei der Beschleunigungssensor aus den mittels der wenigstens zwei Sensoren bestimmten Vertikalbewegung der Tagflächen eine Rollbeschleunigung des Flugzeugs bestimmt. Ein Beschleunigungssensor kann durch ein oder mehrere Kraft-, Druck-, Dehnungs-, Bewegungs- oder Positionssensoren gebildet sein, sofern deren Anordnung und die Verarbeitung ihrer Messwerte eingerichtet ist, eine lokale Beschleunigung an einem Ort des Flugzeugs zu bestimmen.

Die Anordnung kann eine weitere offenbarungsgemäße Vorrichtung aufweisen, wobei das Flugzeug ein weiteres Stellsystem, welches eingerichtet ist, das Flugzeug in dem wenigstens einen Freiheitsgrad oder in wenigstens einem weiteren Freiheitsgrad zu steuern, und einen zusätzlichen Beschleunigungssensor aufweist, welcher an einem zusätzlichen Punkt des Flugzeugs angeordnet ist. Hierbei kann die Flugregelungs-Vorrichtung eingerichtet sein, über die Ausgangsschnittstelle die die Führungsgröße angebenden ersten Eingangsdaten zusätzlich an die weitere Vorrichtung zu senden. Der zusätzliche Beschleunigungssensor kann eingerichtet sein, die lokale Beschleunigung des Flugzeugs an dem zusätzlichen Punkt zu messen und eine zusätzliche Regelgröße angebende zweite Eingangsdaten an die weitere Vorrichtung zu senden, welche die lokale Beschleunigung an dem zusätzlichen Punkt angeben. Weiterhin kann das weitere Stellsystem eingerichtet sein, die Stellgröße von dem Steuerausgang der weiteren Vorrichtung zu empfangen und eine dieser Stellgröße entsprechende Stellbewegung auszuführen.

In entsprechender Ausführung können weitere Vorrichtungen und weitere Stellsysteme vorgesehen sein, wobei die oben dargelegten Ausgestaltungen betreffend das Stellsystem für die weiteren Stellsysteme entsprechend vorgesehen sein können. Auf diese Weise kann eine Regelung für mehrere oder alle Bewegungs-Freiheitsgrade des Flugzeugs bereitgestellt sein. Mehrere offenbarungsgemäße Vorrichtungen können als virtuelle Vorrichtungen in einer physischen Vorrichtung bereitgestellt sein.

Die mittels der Flugregelungs-Vorrichtung bereitgestellte Führungsgröße kann eine Soll-Beschleunigung des Flugzeugs in mehreren Freiheitsgraden angeben. Freiheitsgrade des Flugzeuges können beispielsweise die Positionen in drei Raumrichtungen und drei Lagewinkel umfassen. Bei einem elastischen Flugzeug können Freiheitsgrade auch Größen zur Charakterisierung des Verformungszustandes, beispielsweise modale Amplituden umfassen. Alternativ oder zusätzlich können Freiheitsgrade des Flugzeugs durch die Position verschiedener Punkte des Flugzeugs im Raum gegeben sein.

Alternativ dazu, in mehreren offenbarungsgemäßen Vorrichtungen dieselbe (insbesondere vektorielle) Führungsgröße bereitzustellen, kann vorgesehen sein, dass die Flugregelungs-Vorrichtung eine jeweilige Führungsgröße für jede der Vorrichtungen bereitstellt, wobei die jeweilige Führungsgröße eine Soll-Beschleunigung des Flugzeugs in einem Freiheitsgrad angibt, der dem Freiheitsgrad entspricht, welcher mittels dem der jeweiligen Vorrichtung zugeordneten Stellsystem primär, vorwiegend oder ausschließlich beeinflusst wird.

In Ausgestaltungen mit mehr als einer offenbarungsgemäßen Vorrichtung kann anstatt eines jeweiligen einer der Vorrichtungen zugeordneten Beschleunigungssensors ein einziger Beschleunigungssensor oder ein einziges System mehrerer Beschleunigungssensoren vorgesehen sein, welche eine Beschleunigung des Flugzeugs in mehreren Freiheitsgraden und / oder an mehreren Punkten des Flugzeugs, gegebenenfalls als virtuelle Beschleunigungsmessung, bestimmen und entsprechende jeweilige Regelgrößen für die offenbarungsgemäßen Vorrichtungen bereitstellen. Die Messwerte eines oder mehrerer Beschleunigungssensoren können für mehrere der offenbarungsgemäßen Vorrichtungen bereitgestellt werden. Hierbei müssen die Anzahlen der bereitgestellten Beschleunigungssensoren, Führungsgrößen und offenbarungsgemäßen Vorrichtungen untereinander jeweils nicht übereinstimmen. In besonders vorteilhaften Ausführungsformen kann dies jedoch der Fall sein, wodurch eine Entkoppelung verschiedener Freiheitsgrade sowie eine beliebige Vorgabe der Systemdynamik ermöglicht sein kann.

Das Flugzeug kann ein hoch flexibles Flugzeug sein. Hierbei kann eine vollständige Zustandsrückführung vorgesehen sein, beispielsweise indem mit mehreren Beschleunigungssensoren an über das Flugzeug verteilten Positionen Beschleunigungen gemessen werden oder über eine Separation der Starrkörperbewegung von der Strukturdynamik, wobei eine Aufteilung in Starrkörperfreiheitsgrade und Amplituden der elastischen Methoden erfolgt, wobei die Bewegungsgleichungen der Starrkörperbewegung und der Strukturdynamik inertial entkoppelt sind, jedoch eine Kopplung über äußere Kräfte (Aerodynamik) gegeben ist. Im Falle einer vollständigen Zustandsrückführung kann eine innerste Regelschleife mit einer Rückführung einer lokal gemessenen Beschleunigung vorgesehen sein. Hierbei kann eine vollständige Beeinflussung aller Eigenformen ermöglicht sein, insbesondere wenn eine Anzahl an Beschleunigungspunkten einer Anzahl betrachteter Freiheitsgrade entspricht. In äußeren Regelschleifen kann eine separate Regelung von Starrkörperbewegung und Strukturdynamik bereitgestellt sein. Hierzu kann die Regelung von Starrkörperbewegung und Strukturdynamik in einem Kaskadenaufbau vorgesehen sein. Sollwerte für Beschleunigungen der Starrkörperfreiheitsgrade und der modalen Freiheitsgrade können in Sollwerte für die lokalen Beschleunigungen umgerechnet werden, beispielsweis mittels Eigenvektoren und kinematischen Übersetzungen. Die äußere Regelschleifen können sich auf generalisierte Koordinaten beziehen, während innere Regelschleifen sich auf die lokalen Freiheitsgrade beziehen. Das Systemverhalten kann von der Beschreibungsform unabhängig sein, wobei eine Transformation zwischen verschiedenen Freiheitsgradsystemen und Zustandsdarstellungen ermöglicht sein kann.

Alternativ kann für eine Ausgestaltung mit einem hoch flexiblen bzw. elastischen Flugzeug eine lokale Beschleunigungsmessung an dem Stellsystem vorgesehen sein, im Falle eines Leitwerks insbesondere direkt an der Stellfläche auf einem unbeweglichen Teil des Leitwerks, wobei die lokale Beschleunigung ausschließlich für die Regelung des Stellsystems verwendet wird, an dem gemessen wird. Die Anzahl der Stell- und Messpositionen kann geeignet gewählt sein und der Anzahl der berücksichtigten Freiheitsgrade entsprechen, um zu ermöglichen, eine Systemdynamik auch in diesem Fall frei vorzugegeben. Bei einem elastischen Flugzeug können zwischen einem relativ zu dem Flugzeug unbeweglichen Teil des Leitwerks und anderen Teilen des Flugzeuges, beispielsweise einem Teil des Rumpfes oder dem Schwerpunkt des Flugzeugs Relativbewegungen auftreten, die durch die elastische Verformung bedingt sind.

Allgemein kann das Flugzeug ein Flugzeug beliebiger Art sein, beispielsweise ein leicht flexibles oder elastisches, moderat flexibles oder elastisches oder hoch flexibles oder elastisches Flugzeug. Hierbei kann ein hoch flexibles (elastisches) Flugzeug insbesondere ein Flugzeug sein, welches mittels einer linearen Betrachtung nicht mehr ausreichend genau beschreibbar ist. Bei einem flexiblen Flugzeug kann die Beschleunigung des Flugzeugs insbesondere eine Beschleunigung der elastischen Flugzeugstruktur an einem Punkt sein, an der aeroelastische Schwingungsformen (Eigenformen) ein Extremum oder einen Knotenpunkt aufweisen.

Das Verfahren zur Steuerung und Regelung eines Stellsystems eines Flugzeugs kann das Empfangen von eine Stellsystem-Regelgröße angebenden dritten Eingangsdaten an einer dritten Eingangsschnittstelle der Vorrichtung umfassen, wobei das Bestimmen der Stellgröße unter Berücksichtigung der Führungsgröße und der Regelgröße das Bestimmen einer Stellsystem-Führungsgröße unter Berücksichtigung der Führungsgröße und der Regelgröße und das Bestimmen der Stellgröße unter Berücksichtigung der Stellsystem-Führungsgröße und der Stellsystem-Regelgröße umfasst.

Die vorangehend bezüglich der Vorrichtung für die Steuerung und Regelung eines Stellsystems eines Flugzeugs erläuterten Ausgestaltungen können im Zusammenhang mit der Vorrichtung und / oder dem Verfahren entsprechend vorgesehen sein und umgekehrt. Insbesondere kann die Vorrichtung für die Funktion mit im Zusammenhang mit der Anordnung erläuterten Komponenten eingerichtet sein und die Anordnung kann Komponenten aufweisen, welche eingerichtet sind, im Zusammenspiel mit der Vorrichtung die erläuterten Funktionen bereitzustellen.

Gemäß der Offenbarung ist eine Vorrichtung für die Steuerung und Regelung eines Stellsystems eines Fahrzeugs bereitgestellt, die, sofern es sich bei dem Fahrzeug nicht um ein Flugzeug handelt, nicht zum Schutzumfang gehört und die gebildet ist mit einer ersten Eingangsschnittstelle, welche eingerichtet ist, eine Führungsgröße angebende erste Eingangsdaten zu empfangen, einer zweiten Eingangsschnittstelle, welche eingerichtet ist, eine Regelgröße angebende zweite Eingangsdaten zu empfangen, und einem Steuerausgang, welcher eingerichtet ist ein Steuersignal auszugeben, welches eine Stellgröße für ein Stellsystems eines Fahrzeugs angibt, welches mittels des Stellsystems zu steuern ist. Die Führungsgröße gibt eine Soll-Beschleunigung an einem Punkt des Fahrzeugs an, welches mittels des Stellsystems zu steuern ist, und die Regelgröße gibt eine Ist-Beschleunigung des Fahrzeugs an dem Punkt an. Die Vorrichtung ist eingerichtet, aus der Differenz der Führungsgröße und der Regelgröße die Stellgröße zu bestimmen und das der Stellgröße entsprechende Steuersignal über den Steuerausgang auszugeben. Im Zusammenhang mit der Vorrichtung für die Steuerung und Regelung eines Stellsystems eines Fahrzeugs können die mit Bezug auf die Vorrichtung für die Steuerung und Regelung eines Stellsystems eines Flugzeugs vorgesehenen Ausführungen entsprechend vorgesehen sein. Insbesondere ist gemäß der Offenbarung eine entsprechende, insofern nicht auf ein Flugzeug bezogen nicht zum Schutzumfang gehörende, Anordnung für die Steuerung und Regelung eines Stellsystems eines Fahrzeugs mit einem Fahrzeug, aufweisend ein Stellsystem und einen Beschleunigungssensor, einer Fahrzeugregelungs-Vorrichtung mit einer Ausgangsschnittstellen und einer Vorrichtung für die Steuerung und Regelung eines Stellsystems eines Fahrzeugs bereitgestellt. Weiterhin ist gemäß der Offenbarung ein entsprechendes Verfahren zur Steuerung und Regelung eines Stellsystems geschaffen. Bei dem Fahrzeug kann es sich insbesondere um ein Luftfahrzeug handeln, erfindungsgemäß um ein Flugzeug, in nicht zum Schutzumfang gehörenden Beispielen um einen Helikopter oder ein Luftschiff. Alternativ kann das Fahrzeug in nicht zum Schutzumfang gehörenden Beispielen beispielsweise ein Wasserfahrzeug oder ein Raumfahrzeug sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine bekannte Anordnung für die Steuerung und Regelung eines Stellsystems eines Flugzeugs;
- Fig. 2: eine offenbarungsgemäße Anordnung für die Steuerung und Regelung eines Stellsystems eines Flugzeugs;
- Fig. 3: einen Anordnung eines Beschleunigungssensors an einem Höhenleitwerk eines Flugzeugs;
- Fig. 4: eine weitere Anordnung für die Steuerung und Regelung eines Stellsystems eines Flugzeugs;
- Fig. 5: eine schematische Darstellung eines Konzepts für eine beschleunigungsbasierte Rolllageregelung eines Flugzeugs;
- Fig. 6: eine schematische Darstellung eines Konzepts für eine beschleunigungsbasierte Regelung mechanischer Systeme;
- Fig. 7: eine schematische Darstellung eines Konzepts für eine beschleunigungsbasierte Regelung elastischer Flugzeuge;
- Fig. 8A-E: die Gesamt-Systemdynamik für eine bekannte sowie für eine offenbarungsgemäße Regelung eines Stellsystems eines Flugzeugs;
- Fig. 9: ein Bode-Diagramm für eine vorbekannte und für eine offenbarungsgemäße Ausführungsform einer Regelung eines Stellsystems eines Flugzeugs;
- Fig. 10: eine schematische Darstellung einer Anordnung an einem flexiblen Flugzeug; und
- Fig. 11: eine schematische Darstellung für eine alternative Anordnung an einem flexiblen Flugzeug.

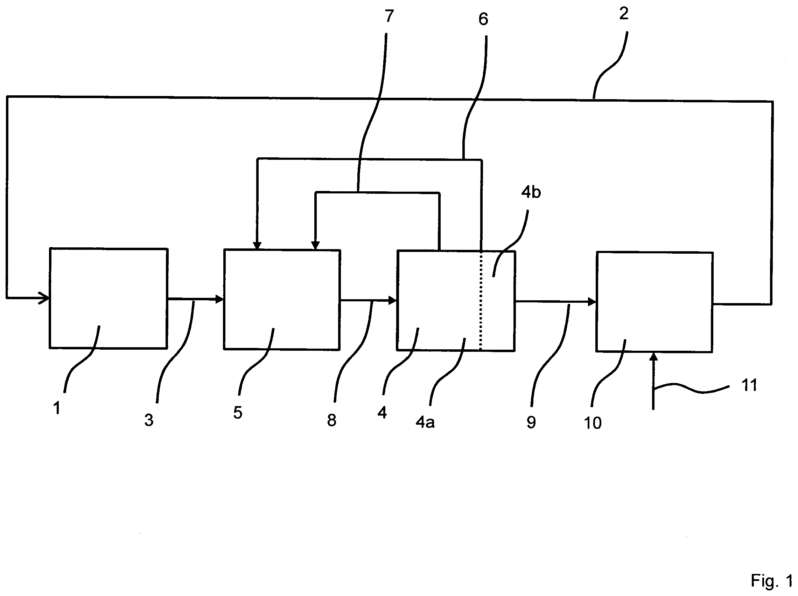

Die Fig. 1 zeigt eine Anordnung für die Steuerung und Regelung eines Stellsystems eines Flugzeugs gemäß einem bekannten Ansatz. Hierbei empfängt ein Flugregelungs-Vorrichtung 1 des Flugzeugs, bei der es sich um ein automatisches Steuerungssystem handelt, welches auch als Flugsteuerungssystem bezeichnet werden kann, Messgrößen 2 zur Beschreibung des Bewegungszustandes des Flugzeugs. Anhand des Bewegungszustandes des Flugzeugs bestimmt die Flugregelungs-Vorrichtung 1 eine Führungsgröße 3 für die Regelung des Stellsystems 4. Das Stellsystem 4 ist hierbei mit einem Stellorgan 4a und einem Krafterzeuger 4b gebildet, wobei das Stellsystem weitere Komponenten umfassen kann. Bei dem Krafterzeuger 4b kann es sich insbesondere um eine Stellfläche eines Leitwerks und gegebenenfalls feststehende Komponenten des Stellwerks, welche an der Krafterzeugung teilhaben, handeln. Alternativ kann der Krafterzeuger 4b beispielweise eine Düse oder ein Propeller sein. Das Stellorgan 4a dient dazu, den Krafterzeuger 4b derart zu beeinflussen, dass eine gewünschte Kraftwirkung auf das geregelte System, also das Flugzeug, eintritt. In Ausgestaltungen, in denen das Stellsystem 4 ein Leitwerk ist, kann das Stellorgan 4a ein Servomotor sein, welcher eine Stellfläche des Leitwerks als Krafterzeuger 4b oder Teil des Krafterzeugers relativ zu einem unbeweglichen Teil des Leitwerks verschwenkt. In alternativen Ausgestaltungen kann das Stellorgan 4a zum Beispiel ein Ventil einer als Krafterzeuger 4a dienenden Düse oder ein Antriebsmotor eines Propellers sein.

Die Führungsgröße 3 gibt eine Soll-Stellposition des Stellorgans 4a des Stellsystems 4 an, also beispielsweise eine (einer Stellflächen-Stellung entsprechende) Rotations-Stellung eines Servomotors, einen Öffnungszustand eines Ventils einer Düse oder eine Antriebsstellung eines Antriebsmotors eines Propellers, aus der sich eine Propellerdrehzahl ergibt, oder eines Stellmotors zur Blattwinkelverstellung.

Eine Regel-Vorrichtung 5 der Anordnung empfängt die Führungsgröße 3 über eine entsprechende Eingangsschnittstelle. Über eine entsprechende weitere Eingangsschnittstelle empfängt die Regel-Vorrichtung zudem eine Regelgröße 6, welche die tatsächliche Stellposition des Stellsystems angibt. Die Regel-Vorrichtung bestimmt die Regelabweichung als Differenz zwischen dem Sollwert der Stellposition gemäß der Führungsgröße 3 und dem Istwert der Stellposition gemäß der Regelgröße 6. Durch Multiplikation mit einem Proportionalitätsfaktor wird in der Regel-Vorrichtung 5 aus der Regelabweichung eine Stellsystem-Führungsgröße bestimmt, welche mit einer Stellsystem-Regelgröße 7 verglichen wird, um eine Stellgröße 8 des Stellsystems zu bestimmen. Beispielsweise kann es sich bei der Stellgröße 8 um eine Aktuatorspannung oder um einen Aktuatorstrom handeln.

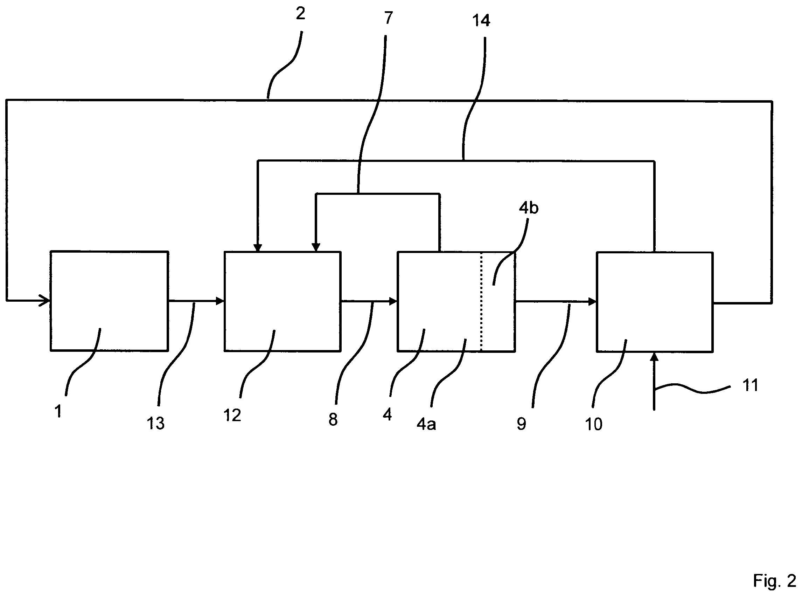

Aufgrund der Stellgröße 8 bewirkt das Stellorgan 4a eine Stellung des Krafterzeugers 4b. Hierdurch ergibt sich eine Kraft- und/oder Drehmomentwirkung 9 auf das mechanische System 10 Flugzeug. Während das Flugzeug als mechanisches System 10 in den Figuren 1 und 2 von den übrigen Komponenten getrennt dargestellt ist, bilden das Stellsystem 4 und in vorteilhaften Ausgestaltungen auch Flugregelungs-Vorrichtung 1 sowie die Regel-Vorrichtung 5 einen Teil des Flugzeugs.

Neben der gewünschten Kraft- und/oder Drehmomentwirkung 9 wirken auf das mechanische System 10 des Flugzeugs Störkräfte und / oder -Momente 11, welche durch äußere Einflüsse verursacht sind, beispielsweise Windeinwirkung, insbesondere in Form von Windböen. Wie der Darstellung der Fig. 1 zu entnehmen ist, können die auf das Flugzeug wirkenden Störkräfte und / oder -Momente 11 nur dann durch die Flugregelungs-Vorrichtung 1 kompensiert werden, wenn Messgrößen 2 berücksichtigt werden, die den Einfluss der Störkräfte und/oder -Momente 11 beinhalten. Somit erfolgt eine solche Berücksichtigung ausschließlich im Rahmen der Flugregelung, welche im Vergleich zur Stellsystem-Regelung (Servoregelung) üblicherweise langsam ist.

Die Fig. 2 zeigt nun eine offenbarungsgemäße Anordnung für die Steuerung und Regelung eines Stellsystems eines Flugzeugs. Im Vergleich zu der Anordnung gemäß der Fig. 1 ist offenbarungsgemäß eine Vorrichtung 12 für die Steuerung und Regelung des Stellsystems 4 vorgesehen, welche eingerichtet ist, an einer ersten Eingangsschnittstelle eine Führungsgröße 13 zu empfangen, welche eine Soll-Beschleunigung an einem Punkt des Flugzeugs angibt. Hierzu ist die Flugregelungs-Vorrichtung 1 eingerichtet, aus den Messgrößen 2 die die Soll-Beschleunigung angebende Führungsgröße 13 zu bestimmen und an die Vorrichtung 12 zu senden. An einer zweiten Eingangsschnittstelle empfängt die Vorrichtung 12 eine Regelgröße 14, welche die Ist-Beschleunigung an dem Punkt des Flugzeugs angibt.

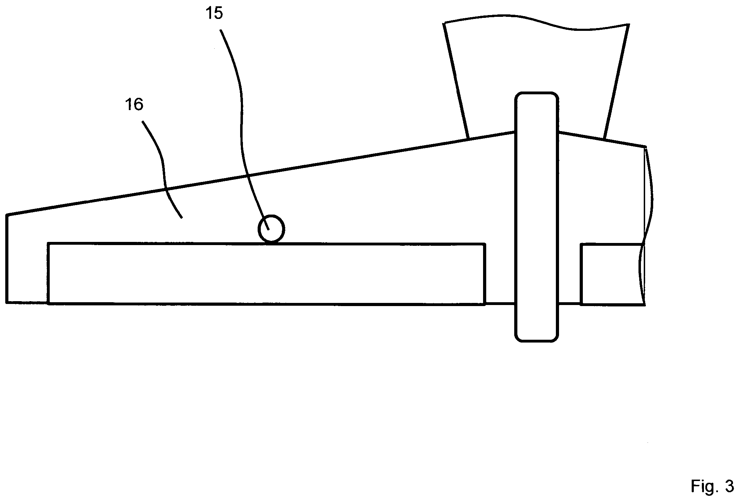

Insbesondere kann die Beschleunigung des Flugzeugs eine lokale Beschleunigung an dem Stellsystem 4 sein. Die Fig. 3 zeigt beispielhaft die Anordnung eines Beschleunigungssensors 15 am unbeweglichen Teil eines Höhenleitwerks 16 eines Flugzeugs. Hierbei ist das Höhenleitwerk 16 ein Stellsystem 4 des Flugzeugs, bei dem durch eine Bewegung der als Krafterzeuger 4a fungierenden Stellfläche des Leitwerks mittels eines Servomotors als Stellorgan 4a eine Kraftwirkung auf das Flugzeug bewirkt wird, welche zu einem Nicken führt und so ein Steigen oder Sinken des Flugzeugs nach sich verursacht.

Alternativ kann die Beschleunigung eine Beschleunigung an einem anderen Punkts des Flugzeugs sein, beispielweise in einem Schwerpunkt des Flugzeugs. Die Beschleunigung kann direkt mit einem Beschleunigungssensor gemessen oder aus einem oder mehreren Messwerten bestimmt werden, bei denen es sich um Beschleunigungen an einem oder mehreren anderen Punkten oder andere Größen als Beschleunigungen handeln kann, zum Beispiel um vertikale Bewegungen (Änderungen der Position) von Tragflächen.

Die Regel-Vorrichtung 12 bestimmt die Regelabweichung als Differenz zwischen dem Sollwert der Beschleunigung gemäß der Führungsgröße 13 und dem Istwert der Beschleunigung gemäß der Regelgröße 14. Durch Multiplikation mit einem Proportionalitätsfaktor wird in der Regel-Vorrichtung 12 aus der Regelabweichung eine Stellsystem-Führungsgröße bestimmt, welche mit einer Stellsystem-Regelgröße 7 verglichen wird, um eine Stellgröße 8 des Stellsystems zu bestimmen. Aufgrund der Stellgröße 8 bewirkt das Stellorgan 4a eine Stellung des Krafterzeugers 4b, welche zu einer Kraftwirkung 9 auf das mechanische System 10 Flugzeug führt.

In einer alternativen Ausgestaltung kann anstatt einer solchen Kaskadenstruktur eine parallele Rückführung vorgesehen sein, bei der Regelgrößen 7 und 14 zurückgeführt und hierbei jeweils modifiziert, insbesondere mit einem Verstärkungsfaktor multipliziert und/oder integriert werden. Hierbei wird die Führungsgröße 13 mittels eines Vorfilters den Regelgrößen 7 und 14 entsprechend modifiziert und anschließend mittels Addition der Regelgrößen 7, 14 und der Führungsgröße 13 die Stellgröße 8 bestimmt.

Wie in der Fig. 2 erkennbar, ist die Regelgröße 14 eine Größe des mechanischen Systems 10 Flugzeug. Die Störkräfte und / oder -Momente 11 beeinflussen die Beschleunigung des Flugzeugs, so dass die mit der Regelgröße 14 angegebene Beschleunigung des Flugzeugs diese Einflüsse bereits, zumindest teilweise, enthält. Somit ist bei dem in der Fig. 2 dargestellten Regelungs-Konzept im Vergleich zu dem in der Fig. 1 illustrierten bekannten Konzept bereits eine Berücksichtigung von auf das Flugzeug wirkenden Störkräften und / oder - Momenten 11 bei der Regelung des Stellsystems 4 des Flugzeugs erreicht.

Bei der Stellgröße 8 kann es sich insbesondere um eine Aktuatorspannung oder um einen Aktuatorstrom handeln. Beispielsweise kann die Stellsystem-Führungsgröße ein Sollwert einer Stellgeschwindigkeit des Stellorgans 4a, also insbesondere eines Aktuators, sein. Die Stellsystem-Regelgröße 7 kann in diesem Fall eine Ist-Stellgeschwindigkeit des Stellorgans 4a sein. In einer beispielhaften Ausgestaltung wird aus der Differenz der Stellsystem-Führungsgröße und der Stellsystem-Regelgröße ein Sollwert eines Aktuatorstroms bestimmt. Der Sollwert des Aktuatorstroms kann die Stellgröße 8 sein. Alternativ kann eine weitere innere Regelschleife vorgesehen sein, in der unter Verwendung des Sollwerts des Aktuatorstroms die Stellgröße 8 bestimmt wird.

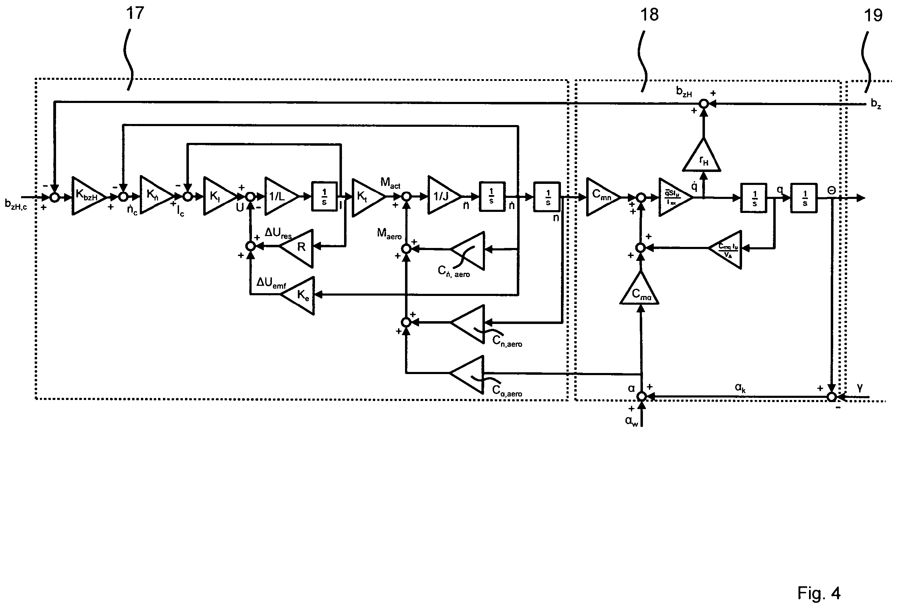

Die Fig. 4 zeigt eine solche Ausgestaltung einer Anordnung für die Steuerung und Regelung eines Stellsystems eines Flugzeugs, bei der eine weitere innere Regelschleife bereitgestellt ist. Hierbei ist beispielhaft eine Nicklageregelung mit einem rotatorischen, elektromagnetischen Aktuator eines Höhenleitwerks gezeigt. Im Gegensatz zu einer bekannten Regelung mit Rückführung eines Stellflächenausschlags n, wird eine lokale Beschleunigung b_{zH} an dem Höhenleitwerk zurückgeführt und innerhalb der Stellsystem-Regelung 17 eine Regelabweichung zu einer vorgegebenen Beschleunigung b_{zH,c} bestimmt. Hieraus wird unter Anwendung des Faktors K_{bzH} ein proportionales Stellgeschwindigkeitskommando ṅ_{c} bestimmt, das von der inneren Geschwindigkeitsregelschleife eingestellt wird. Der kommandierte Stromfluss I_{c} (Aktuator-Führungsgröße) ergibt sich dabei proportional (Faktor K_{ṅ}) zum Geschwindigkeitsfehler ṅ_{c}-ṅ, der Differenz aus dem Stellgeschwindigkeitskommando ṅ_{c} (Stellsystem-Führungsgröße) und der Ist-Stellgeschwindigkeit ṅ, welche die Stellsystem-Regelgröße darstellt. Die Klemmenspannung U des Motors schließlich bildet die Stellgröße. Sie wird proportional (Faktor K_{I}) zum Regelfehler I_{c}-I der Stromregelungskaskade eingestellt. Hierbei stellt der Ist-Strom I die Aktuator-Regelgröße dar.

Im Rahmen der physikalischen Abläufe innerhalb des Aktuators entsprechend einer Modellierung als Gleichstrom-Nebenschluss-Maschine bewirkt die Klemmenspannung eine Änderung des Stromflusses in den Motorwindungen, die zu deren Induktivität L antiproportional ist. Dabei sind jedoch der Spannungsabfall ΔUᵣₑₛ = R·I aufgrund des Windungswiderstandes R, sowie die von der Drehbewegung proportional zur Motorkonstante Kₑ induzierte Gegenspannung ΔU_{emf} = Kₑ·ṅ zu berücksichtigen, die die Klemmenspannung vermindern. Der Stromfluss I ergibt sich durch Integration der Stromänderung und bewirkt ein mit der Motorkonstante Kₜ proportionales Antriebsmoment M_{act}.

Bezüglich der physikalischen Wirkung auf das Stellsystem wirkt zusätzlich zu dem Antriebsmoment M_{act} das aerodynamische Ruderscharniermoment Mₐₑᵣₒ auf die Stellfläche ein, das sowohl mit dem Faktor C_{n,aero} zum Ausschlag n proportionale als auch dämpfende (Faktor C_{ṅ,aero}) Anteile umfasst. Weiterhin wird das aerodynamische Ruderscharniermoment Mₐₑᵣₒ von der Anströmungsrichtung beeinflusst (Faktor C_{α,aero}). Das resultierende Gesamtmoment führt zu einer mit dem Kehrwert 1/J der Rotationsträgheit skalierenden Stellbeschleunigung n̈.

Im rechten Teil der Fig. 4 ist die Dynamik der Flugzeug-Nickbewegung 18 vereinfacht dargestellt. Die Nickbeschleunigung q ist mit der inversen Nickträgheit 1/I_{yy} proportional zum Nickmoment, das sich durch Denormalisierung mit Staudruck q̅, Flügelfläche S und Flügeltiefe I_{µ} aus dem Nickmomentenbeiwert ergibt. Dieser enthält im Wesentlichen Einflüsse des Höhenruders (Cₘₙ·n), der Nickrate (C_{mq}·I_{µ}·1/V_{A}·q̇) und des Anstellwinkels (C_{mα}·α). Der Anstellwinkel α wird dabei neben dem Anteil der Länglage Θ vom Einfluss γ der Bahnbewegung 19 bestimmt. Er enthält darüber hinaus den wesentlichen Teil des Störeinflusses (Böen) in Form des Windanstellwinkels α_{W}. Die lokale Beschleunigung b_{zH} am Höhenleitwerk ergibt sich aus der Nickbeschleunigung q mit dem Hebelarm r_{H} sowie aus der Vertikalbeschleunigung b_{z} des Flugzeugschwerpunkts.

Gemäß der Offenbarung wird also, wie beispielsweise aus der Fig. 4 ersichtlich, nicht die Stellposition als Regelgröße herangezogen. Auch dient keine Kraft- bzw. Drehmomentmessung als Regelgröße. Zudem erfolgt die Messung der Regelgröße nicht im Antriebsstrang des Aktuators oder auf der Stellfläche, sondern in der Ausführung der Fig. 4 auf dem der Stellfläche zugeordneten Leitwerk (der relativ zum Flugzeug unbeweglichen Auftriebsfläche). Es erfolgt keine Messung der (Dreh-)Beschleunigung n̈ des Aktuators, die dem Stellmoment (Antriebsmoment des Aktuators, M_{act}) proportional wäre. Die lokale Beschleunigung an der Auftriebsfläche verhält sich dagegen vielmehr proportional zum Stellflächenwinkel und der durch ihn erzeugten Auftriebskraft, also zu einer Größe, die durch zwei Integrationsstufen von der Beschleunigung n̈ des Aktuators getrennt ist, wie in der Fig. 4 erkennbar. Es handelt sich bei der Lokalbeschleunigung um eine Ausgangsgröße, die zu wesentlichen Teilen vom Stellflächenwinkel n als Systemzustand abhängt und durch deren Rückführung sich die Systemdynamik daher in ähnlicher Weise beeinflussen lassen kann. Gemäß der in der Fig. 4 gezeigten Ausführung soll die Geschwindigkeitsregelschleife einer klassischen Servoregelung (mittlere Kaskade in der Fig. 4) beibehalten werden, so dass nach wie vor eine der Systemordnung entsprechende Zahl linear unabhängiger Ausgangsgrößen zurückgeführt wird. Es kann damit ermöglicht sein, die Systemdynamik beliebig zu gestalten. Hierbei kann eine möglichst "steife" Auslegung der Ruderwinkeldynamik erwünscht sein. Insbesondere kann nicht die Reduktion der Aktuatorbelastung oder des Stellaufwandes angestrebt sein, sondern es kann vorgesehen sein die Stellfläche so schnell wie möglich in diejenige Position zu bewegen, die den Böeneinfluss auf das entsprechende Leitwerk kompensiert. Diese Position ist im Allgemeinen nicht identisch mit der Ruhelage, in die das freie Ruder bei konstant gehaltenem Stellmoment auswehen würde.

Aus der Lokalbeschleunigungsregelung können sich gegenüber einer Regelung des Ruderscharniermomentes Vorteile ergeben. Die Lokalbeschleunigungsmessung erfasst (im Gegensatz zum Stellflächenwinkel oder dem Ruderscharniermoment) direkt den von der Böe verursachten Zusatzauftrieb über den zusätzlichen Anstellwinkel α_{w} mit. Die Lokalbeschleunigung reflektiert bei elastischen Flugzeugen unmittelbar den strukturdynamischen Schwingungszustand. Die Rückführung der Beschleunigung auf die Stellgeschwindigkeit einer am selben Ort wirkenden Stellfläche entspricht einer virtuellen Dämpfung (ähnlich dem sogenannten ILAF-Prinzip). Sie kann sich daher insbesondere zur aktiven Stabilisierung hochelastischer Konfigurationen eignen. Weiterhin enthält die Lokalbeschleunigung Einflüsse verschiedener Flugzustandsgrößen (Θ, γ, q, vgl. Fig. 4), die durch die Regelung mit kompensiert werden können. Gegenüber dem hochdynamischen Rückführzweig über K_{bz,H} können diese Einflüsse an Bedeutung verlieren, so dass sich eine erheblich größere Robustheit gegenüber veränderlichen aerodynamischen Eigenschaften ergeben kann. Die Lokalbeschleunigung kann sich in direkter, rein kinematischer Beziehung aus einer geplanten Bahn- und Fluglagetrajektorie ergeben. Es kann daher ermöglicht sein, einfache Vorsteuerungsgesetze abzuleiten, die unabhängig von den Eigenschaften eines bestimmten Flugzeuges sind. Die hohe Dynamik der Lokalbeschleunigungsregelung (die der klassischen Positionsregelschleife der Servoregelung entspricht) kann so nicht nur zur Störunterdrückung, sondern auch für das Führungsverhalten genutzt werden. Damit kann eine wesentlich agilere Bahnführung ermöglicht sein.

Die Regelung von Aktuatoren (Servoregelung) und die Regelung des Flugzustandes (Flugregelung) stellen traditionell voneinander getrennte Forschungsdisziplinen dar, die in unterschiedlichen Expertenkreisen behandelt werden. Die Rückführung einer auf der Flugzeugstruktur gemessenen Lokalbeschleunigung in einer inneren Regelschleife, die traditionell Teil der Servoregelung ist, schlägt eine Brücke zwischen beiden Bereichen. Dies erfordert eine ganzheitliche Betrachtung der gesamten Regelstrecke, die das Flugzeug und seine Stellglieder als Einheit begreift. Durch die Verwendung der Lokalbeschleunigung als Vorgabegröße können Teile der Flugdynamik in die Regelstrecke der Servoregelung einbezogen werden. Es kann ermöglicht sein, die Regelstrecke der Flugregelung zu vereinfachen und Abhängigkeiten von spezifischen Flugeigenschaften zu reduzieren, so dass klassische Flugregelungsstrukturen nicht mehr anwendbar sind.

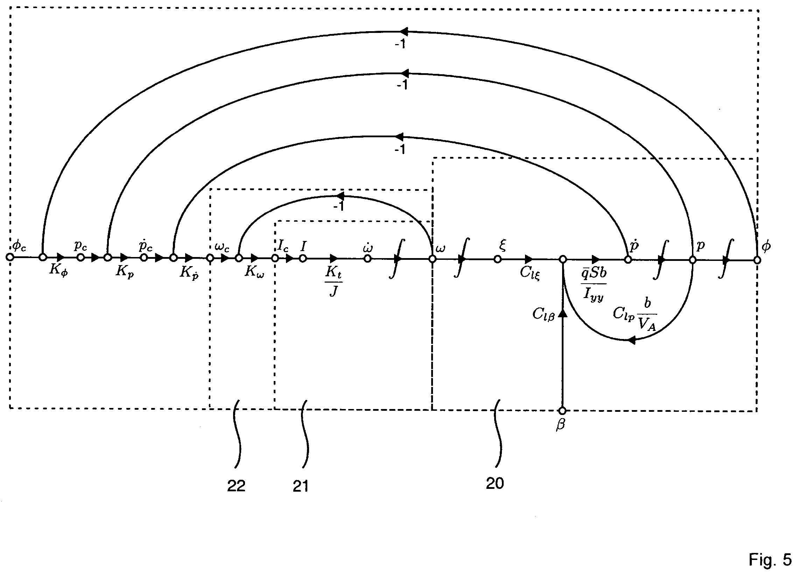

Die Grenze der Stellsystem-Regelung 17 ist gemäß der Darstellung 4 bei der lokale Beschleunigung b_{zH} sowie dem Stellflächenausschlag n gezogen. Es sind andere Darstellungen möglich, bei denen die Definitionen, insbesondere die Grenzen, von Untersystemen anders festgelegt sind (vgl. z.B. Fig. 5), ohne dass sich hierdurch eine Änderung des offenbarungsgemäßen Regelungsprinzips ergibt.

Die in den Figuren 5, 6 und 7 verwendeten Symbole bezeichnen die folgenden Größen:
Skalare:
   C_{Iβ}: Schieberollmoment
   C_{Iξ}: Querruderwirksamkeit
   C_{Ip}: Rolldämpfung
   I: Aktuatorstrom
   I_{yy}: Rollträgheitsmoment des Flugzeugs
   J: Trägheitsmoment des Aktuators
   Kₜ: Drehmomentenkonstante des Aktuators
   K...: Reglerverstärkung der ...-Regelschleife
   S: Flügefläche
   V_{A}: Fluggeschwindigkeit
   q̅: Staudruck
   b: Halbspannweite
   p: Rollrate
   β: Schiebwinkel
   β_{W}: Windschiebewinkel
   ω: Winkelgeschwindigkeit des Aktuators
   ξ: Querruderausschlag
Vektoren:
   η: modale Amplituden (strukturdynamische Freiheitsgrade)
   R: Ortsvektor zum lokalen Beschleunigungsmesspunkt
   q: generalisierte Koordinaten
   u: Stellgrößen
   x: Starrkörperfreiheitsgrade
   z: Störgrößen
Matrizen und Tensoren:
   B_{η}: Stelleinfluss auf generalisierte Kräfte der Strukturdynamikfreiheitsgrade
   Bₓ: Stelleinfluss auf generalisierte Kräfte der Starrkörperfreiheitsgrade
   B: Stelleinfluss auf generalisierte Kräfte
   C: generalisierte Steifigkeitsmatrix
   D: generalisierte Dämpfungsmatrix
   E_{η}: Störeinfluss auf generalisierte Kräfte der Strukturdynamikfreiheitsgrade
   Ex: Störeinfluss auf generalisierte Kräfte der Starrkörperfreiheitsgrade
   E: Störeinfluss auf generalisierte Kräfte
   F_{η}^{ext}, F_{η˙}^{ext}: Einfluss der strukturdeformationsbedingten aerodynamischen Kräfte auf Starrkörperbewegung
   K... : Verstärkungsmatrix der ...-Regelschleife
   L: Kinematische Übersetzungsverhältnisse zwischen generalisierten Starrkörperfreiheitsgraden und Position der lokalen Beschleunigungsmesspunkte
   M: generalisierte Trägheitsmatrix
   Q_{η}, Q_{η̇}: Einfluss der strukturdeformationsbedingten aerodynamischen Kräfte auf Strukturdynamik
   Qₓ, Q_{ẋ} : Einfluss der starrkörperbewegungsabhängigen aerodynamischen Kräfte auf Strukturdynamik
   Λ: Eigenformen (Eigenvektoren) der Strukturdynamik
   β: generalisierte Strukturdämpfungsfaktoren
   γ: generalisierte Steifigkeitsmatrix
   µ: modale Massenmatrix
Indizes:
   c: Kommandogröße, Vorgabewert, Sollwert

In der klassischen Flugregelung entspricht das Kommando der Position (Winkel) der aerodynamischen Stellfläche. Eine hochdynamische (steife) Positionsregelung der Aktuatoren gewährleistet, dass die tatsächliche Stellflächenposition dem Stellkommando präzise folgt. Die Regelungsstruktur entspricht einer Kaskadenregelung mit einer inneren Regelschleife, der Aktuatorregelung (ACL), und einer äußeren Regelschleife, der Flugregelung (FCL). Es erfolgt eine Rückführung von Lagewinkel, Drehraten und Geschwindigkeiten. Beschleunigungsmessungen werden in der Regel nur zur Beobachtung oder als Ersatz für schlecht messbare Zustände genutzt.

Bekannt ist auch eine Ruderscharniermoment-basierte Flugregelung. Das Kommando der FCL entspricht einer Drehmomentvorgabe, das heißt einer direkten Stromvorgabe, für den Aktuator. Im Gleichgewichtszustand entspricht die Drehmomentvorgabe dem aerodynamischen Ruderscharniermoment. Das Konzept ähnelt dem kraftorientierten Steuerverhalten des Piloten bei einer manuellen Steuerung. Eine solche Regelung soll Vorteile für Flugruhe und Lastabminderung bieten, da die Steuerfläche durch ein verändertes Scharniermoment der Bö ausweicht. Hierdurch soll eine Aktuatorenbelastung reduziert und Force-Fight bei redundanten Aktuatoren vermieden werden.

Bei der ebenfalls vorbekannten inkrementellen nichtlinearen Inversion (INDI) erfolgt eine lokale Linearisierung und Inversion der Systemdynamik. Inkrementelle Zuwächse der Stellkommandos werden berechnet. Das Verfahren basiert auf gemessenen und kommandierten (Rotations-) Beschleunigungen und reduziert den Einfluss der (aerodynamischen) Modellgenauigkeit und der Schwerpunktlage für erhöhte Robustheit. Das Stellgesetz beruht dabei auf dem Vergleich zwischen geplanten und tatsächlichen Änderungen (somit Ableitungen) der Zustandsgrößen, welche aufgrund von rotatorischen und translatorischen Beschleunigungsmessungen berechnet oder beobachtet werden. Im Gegensatz zu den offenbarungsgemäßen Konzepten, ist hierbei eine direkte Verwendung dieser Stellgrößenänderung in einer inneren Kaskade der Servoregelung oder eine Ausdehnung des INDI-Ansatzes auf die Aktuatordynamik nicht bekannt. In einem vorgeschlagenen Ansatz dient der Aktuatorstrom als Vorgabegröße und ein dafür modifiziertes Stellgesetz wird abgeleitet. Hierbei wird im Gegensatz zu dem offenbarungsgemäßen Ansatz die quasistationäre Abhängigkeit des Aktuatorstroms vom Ruderscharniermoment zugrundegelegt, so dass die Dynamik des Stellsystems selbst ungeregelt verbleibt.

Für eine aktive Flatterregelung und Lastabminderung ist bekannt, Beschleunigungsmessungen oder modale Freiheitsgrade zurückzuführen. Hierbei entspricht das Kommando der Stellflächenposition. Alternativ werden Zusatzkräfte durch Vibrationsaktuatoren aufgebracht. Dies geschieht oft nicht im Sinne einer Regelung sondern gezielt zur Kompensation einzelner Resonanzfrequenzen.

Bei den bekannten Systemen bestimmt die Dynamik (Bandbreite) des Flugreglers maßgeblich die Präzision der Bahn- und Lagehaltung (Störunterdrückung), die Flugruhe (Störunterdrückung) und die Agilität der Bahnführung (Führungsverhalten). Die maximal nutzbare Bandbreite ist begrenzt durch die Dynamik der unabhängig ausgelegten Aktuatorregelung (innere Regelschleife) sowie gegebenenfalls durch die Dynamik des mechanischen Übertragungsweges zwischen Aktuator und Stellfläche, die Strukturdynamik eines elastischen Flugzeugs und die instationäre Aerodynamik. Für eine optimale FCL-Auslegung ist ein präzises Aerodynamikmodell erforderlich. Dies ist aufwendig und kann mit mangelnder Robustheit behaftet sein. Die inneren Regelschleifen, mindestens die Lageregelung, müssen für jeden Flugzeugtyp individuell ausgelegt werden. Ein präzises aeroelastisches Modell ist erforderlich, um Anregungen der Strukturdynamik auszuschließen. Ein direkter Durchgriff des Wölbklappenausschlags ηₖ auf das vertikale Lastvielfache (also die Lastbeschleunigung) n_{z} erschwert die Auslegung einer Böenlastregelung. Ohne das Vorsehen einer Vorsteuerung, welche mit einer aufwändigen Anstellwinkelmessung einhergeht, ist das Abminderungspotenzial begrenzt.

Die Fig. 5 zeigt eine schematische Darstellung eines Konzepts für eine beschleunigungsbasierte Rolllageregelung eines Flugzeugs. Im Vergleich zum bekannten System tritt an die Stelle der Positionsregelung der Aktuatoren eine Rückführung einer Beschleunigungsmessung, welche die aerodynamische Kraftwirkung der Stellfläche erfasst (zum Beispiel lokale Beschleunigung an der Stellfläche oder Drehbeschleunigung des Flugzeugs). Hierbei wird die klassische Aufteilung zwischen Aktuatorregelung und Flugregelung verändert. Die Schnittstelle zwischen FCL und Aktuatorregelung rutscht eine Kaskade nach innen. Die Zustandsrückführung des Aktuatorausschlags wird ersetzt durch eine Ausgangsrückführung der dazu proportionalen Beschleunigung, die zusätzlich den Störeinfluss (Böen) enthält. Das Kommando der FCL entspricht dann der Stellrate (Winkelgeschwindigkeit) der aerodynamischen Stellfläche. Eine Messung der Stellflächenposition ist nur zur Berücksichtigung der Stellbeschränkung erforderlich.

Bei einem Flugzeug, der Regelstrecke der FCL, ist der Rollmomentenbeiwert C_{I} mit C_{Iξ} proportional zum Querruderausschlag ξ, der in bekannten Systemen die Stellgröße darstellt. Der Rollmomentenbeiwert C_{I} ist mit C_{Iβ} proportional zum Schiebewinkel β, welcher für die reine Rollregelung als Störgröße aufgefasst wird und insbesondere den Windeinfluss β_{w} enthält. Der Rollmomentenbeiwert C_{I} ist mit C_{Ip} proportional zur dimensionslosen Rollrate p*=p·b/V_{A}. Das Rollmoment folgt aus dem Beiwert C_{I} durch Multiplikation mit den Bezugsgrößen (q̅, S, b), die Rollbeschleunigung ist dazu mit der inversen Rollträgheit (1/I_{yy}) proportional. Rollrate p und Rollwinkel Φ ergeben sich durch Integration aus der Rollbeschleunigung. Die bekannte Flugregelung umfasst die vollständige Rückführung der Zustände "Rollrate (p)" und "Hängewinkel (Φ)". Hierbei erfolgt der Aufbau in Form einer Kaskadenregelung, bei der die äußere Regelschleife die Rolllage mit der Führungsgröße "Rollkommando (Φ_{c})" und der Stellgröße "Rollratenkommando (p_{c})" umfasst, welches mit der Verstärkung K_{Φ} proportional zum Regelfehler Φ_{c} - Φ ist. Die innere Regelschleife betrifft dann die Rollrate mit der Führungsgröße "Rollratenkommando (p_{c})" und der Stellgröße "Querruderkommando (ξc)", welches mit der Verstärkung Kₚ proportional zum Regelfehler p_{c} - p ist.

Bei dem Aktuator, der Regelstrecke ACL, entspricht bei Vernachlässigung der elektrischen Zeitkonstante der tatsächliche Stromfluss I dem Stromkommando I_{c}. Das Drehmoment ist mit der Drehmomentkonstante Kₜ proportional zum Stromfluss. Weitere Momentenbeiträge (Reibung, aerodynamisches Ruderscharniermoment etc.) werden vernachlässigt. Die Drehbeschleunigung (ω̇) des Abtriebs folgt aus der Drehimpulserhaltung zu Drehmoment/Trägheitsmoment (J). Die Stellgeschwindigkeit (ω) und der Abtriebswinkel (der dem Querruderausschlag ξ entspricht) folgen durch Integration der Drehbeschleunigung. Die bekannte Aktuatorregelung umfasst dann die vollständige Rückführung der Zustände "Stellgeschwindigkeit (ω)" und "Stellposition (ξ)". Hierbei erfolgt der Aufbau in Form einer Kaskadenregelung, bei der die äußere Regelschleife die Stellposition mit der Führungsgröße "Querruderkommando (ξ_{c})" und der Stellgröße "Stellratenkommando (ω_{c})" umfasst, welches mit der Verstärkung K_{ξ} proportional zum Regelfehler ξ_{c} - ξ ist. Die innere Regelschleife betrifft dann die Stellgeschwindigkeit mit der Führungsgröße "Stellratenkommando (ω_{c})" und der Stellgröße "Stromkommando (Ic)", welches mit der Verstärkung K_{ω} proportional zum Regelfehler ω_{c} - ω ist.

Im Vergleich hierzu zeigt die Fig. 5 für ein beschleunigungsgeregeltes Konzept mit der Regelstrecke Flugzeug 20, dem Aktuator 21 und der Regelstrecke Aktuator 22. Es erfolgt eine Rückführung der gemessenen Rollbeschleunigung (ṗ) anstelle des dazu proportionalen Querruderausschlages (ξ). Das Kommando ω_{c} der FCL entspricht der Stellrate ξ̇. Die offenbarungsgemäße Rückführung erfasst neben der Stellflächenposition ξ auch direkt den Störeinfluss durch β bzw. β_{w}. Somit erfolgt eine Kompensation der Störung bereits eine Regelschleife weiter innen als bei der bekannten Flugregelung. Bei hochdynamischer Auslegung dieser Beschleunigungsregelschleife (p-Rückführung) kann wesentlich bessere Störunterdrückung erreicht werden. Der Vorgabewert der Lageregelungsschleifen (traditionelle "inner loops" der FCL) entspricht direkt der Ratenbeschleunigung (zweite Ableitung der Regelgröße). Bei hochdynamischer Auslegung der Beschleunigungsregelung folgt das Flugzeug unmittelbar der vorgegebenen Ratenbeschleunigung (ṗ_{c} ≈ ṗ). Damit ergibt sich ein einfaches, lineares Verhalten unabhängig von flugzeugspezifischen Parametern. Die Auslegung der Lageregelung kann standardisiert und unabhängig vom Flugzeugtyp und Flugzustand erfolgen. Bei hochdynamischer Auslegung wird die Beschleunigungsrückführung über K_{ṗ} · C_{Iξ} dominant gegenüber den übrigen aerodynamischen Einflüssen (über C_{Iβ} und C_{Ip}) und damit reduziert sich der Einfluss der aerodynamischen Parameter (außer C_{Iξ}) auf den Regelkreis. Damit kann für die FCL-Auslegung auf ein präzises aerodynamisches Modell verzichtet werden. Lediglich die Ruderwirksamkeit C_{Izi} und der Staudruck bleiben relevant. Die Vermeidung des direkten Durchgriffs des Stellkommandos auf die Beschleunigungsmessung vereinfacht die Auslegung und erhöht das Potential der regelungsbasierten Böenlastminderung.

Das Prinzip ist für starre Flugzeuge übertragbar auf den Nickfreiheitsgrad (Messgröße: Nickbeschleunigung, primäre Stellgröße: Höhenruder), den Gierfreiheitsgrad (Messgröße: Gierbeschleunigung, primäre Stellgröße: Seitenruder), den Hubfreiheitsgrad (Messgröße: Vertikalbeschleunigung n_{z}, primäre Stellgröße: Wökbklappe), den Längsfreiheitsgrad (Messgröße: Längsbeschleunigung nₓ, primäre Stellgröße: Spoiler) sowie den Querfreiheitsgrad (nur bei Seitenkrafsteuerung). Idealerweise erfolgt eine Rückführung der Beschleunigungskomponente nicht nur auf die primäre Stellgröße, sondern auf alle Stellgrößen, die den jeweiligen Freiheitsgrad beeinflussen, beispielsweise über Querruderrollmoment, Seitenrudergiermoment, Höhenruderruderauftrieb oder Wölbklappennickmoment. Durch geeignete Wahl der Verstärkungsmatrix können die Freiheitsgrade vollständig entkoppelt werden. Die Wahl der beschreibenden Freiheitsgrade, deren Beschleunigung gemessen wird, ist beliebig. Beispielhaft ist die Rotation und Translation des Schwerpunktes in flugzeugfesten Koordinaten genannt. Ebenso denkbar sind andere Koordinatensysteme sowie andere (gegebenenfalls auch mehrere) Bezugspunkte des starren Körpers, zum Beispiel die vertikale Lage beider Flügelspitzen anstatt des Rollwinkels. Jede Kombination unabhängiger Freiheitsgrade ist möglich, die das System eindeutig beschreibt. Diese stellt einen gültigen Satz generalisierter Koordinaten (q) im Sinne des Lagrange-Formalismus dar.

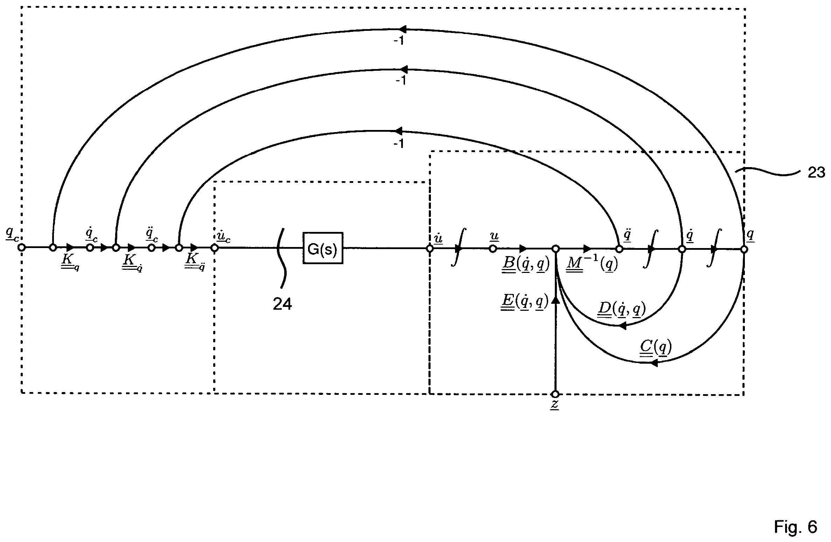

Die Fig. 6 zeigt anhand einer schematischen Darstellung eines Konzepts für eine beschleunigungsbasierte Regelung die Übertragbarkeit des offenbarungsgemäßen Regelungskonzepts auf allgemeine mechanische Systeme. Das Prinzip ist übertragbar auf ein beliebiges mechanisches System 23 mit n Freiheitsgraden, die im Sinne des Lagrange-Formalismus durch generalisierte Koordinaten eindeutig beschrieben werden können, welches durch ein oder mehrere Stellgrößen kontrolliert wird, die einen unmittelbaren Kraft- beziehungsweise Drehmomenteinfluss auf das System 23 haben und dessen Stellgrößen durch einen geregelten Aktuator 24 mit mindestens einfach integrierendem Verhalten bedient werden (alle mechanischen Aktuatoren).

Bei einem, im Gegensatz zu dem System gemäß der Fig. 6, stellpositionsgeregelten Ansatz hat die Stellgröße uᵢ einen Krafteinfluss, der durch generalisierte Kräfte Qᵢ = Bᵢⱼ(q̇,q)·uᵢ beschrieben werden kann. Entsprechendes gilt für Kraft- bzw. Momentenstörungen zᵢ mit den Wirkungsfaktoren Eᵢⱼ(q̇,q). Die Beschleunigung q̈ᵢ der generalisierten Koordinate ist mit Mᵢⱼ⁻¹(q) proportional zur generalisierten Kraft Qᵢ. Generalisierte Geschwindigkeiten q̇ und Koordinaten q folgen durch Integration. Generalisierte Geschwindigkeiten q̇ bewirken bei dissipativen Systemen nicht-konservative "Dämpfungskräfte" D(q̇,q)· q̇. Konservative Kräfte sind mit C(q) proportional zu generalisierten Koordinaten q. Es erfolgt bei bekannten Regelungskonzepten eine vollständige Rückführung aller Zustände, repräsentiert durch die generalisierten Koordinaten (q) und Geschwindigkeiten (q̇). Der Aufbau erfolgt in Form einer Kaskadenregeleung, wobei die äußere Regelschleife generalisierte Koordinaten betrifft. Dere Führungsgröße sind die Sollwerte der generalisierten Koordinaten (q_{c}). Die Stellgröße sind die Sollwerte der generalisierten Geschwindigkeiten (q̇_{c}), welche mit der Verstärkungsmatrix K_{q} proportional zum Regelfehler q_{c} - q sind. Die innere Regelschleife betrifft generalisierte Geschwindigkeiten, wobei die Führungsgröße Sollwerte der generalisierten Geschwindigkeiten (q̇_{c}) sind und die Stellgröße Stellkommandos (u_{c}) sind, welche mit der Verstärkungsmatrix K_{q̇} proportional zum Regelfehler q̇_{c} - q̇ sind.

Der Aktuator hat ein beliebiges Übertragungsverhalten G(s) zwischen kommandierter und tatsächlicher Änderung der Stellgröße u̇, aber wenigstens eine Integrationsstufe. Die Aktuatorregelung umfasst die Rückführung (mindestens) der Stellgrößen u, wobei die Führungsgröße der Sollwert der System-Stellgrößen u_{c} ist. Die Aktuator-Stellgröße ist der Sollwert der System-Stellraten u̇_{c}, der mit Verstärkungen Kᵤ proportional zum Regelfehler u_{c} - u ist.

Im Vergleich zu bekannten Regelungen erfolgt bei dem beschleunigungsgeregelten Ansatz gemäß der Fig. 6 eine Rückführung der gemessenen generalisierten Beschleunigungen q̈ anstelle der dazu proportionalen Stellgrößen u. Das Kommando der Regelung entspricht der Stellrate u̇.

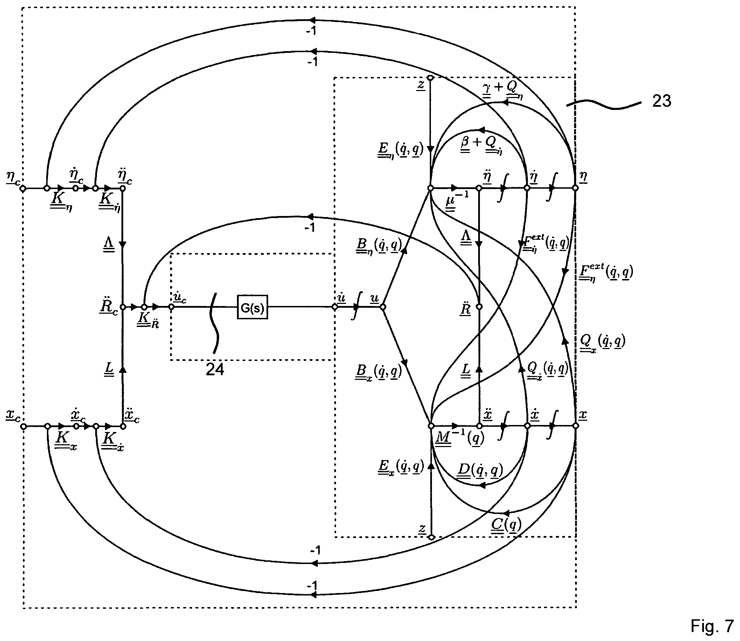

In der Fig. 7 ist ein Konzept für eine beschleunigungsbasierte Regelung elastischer Flugzeuge illustriert. Hierbei zeigt die Fig. 7 den allgemeinen Fall einer vollständigen Zustandsrückführung. Ein elastisches Flugzeug ist ein Sonderfall des im Zusammenhang mit der Fig. 6 erläuterten offenbarungsgemäßen Konzepts, da es durch den Lagrange-Formalismus beschreibbar ist. Die Wahl generalisierter Koordinaten ist prinzipiell beliebig. Eine Möglichkeit besteht in einzelnen Positionen von über das Flugzeug verteilten Beschleunigungssensoren. Hierbei entspricht die gemessene Beschleunigung direkt der generalisierten Beschleunigung q̈. Dies bedingt mindestens sechs Sensoren zur Erfassung der Starrkörperbewegung. Die Anzahl weiterer Sensoren bestimmt, wieviel elastische Moden erfasst werden können. Bei einer alternativen Möglichkeit erfolgt eine Separation von Starrkörperbewegung (mean axes) und Strukturdynamik. Hierbei erfolgt eine Aufteilung in Starrkörperfreiheitsgrade (x = [x, y, z, Φ, Θ, Ψ]^{T}) und Amplituden (η = [η₁, η₂, ... , ηₙ]^{T}) der elastischen Moden, so dass q = [xᵢ, ηᵢ]^{T}. Die Bewegungsgleichungen der Starrkörperbewegung und der Strukturdynamik sind inertial entkoppelt, aber eine Kopplung über äußere Kräfte (Aerodynamik) ist gegeben.

Die Regelstrecke umfasst die Starrkörperdynamik (in der Fig. 7 unten), welche analog zu dem System der Fig. 6 aufgebaut ist, wobei die Entsprechungen q = x, B = Bₓ, und E = Eₓ gelten. Bezüglich der Strukturdynamik (oben in der Fig. 7) hat die Stellgröße uᵢ einen Krafteinfluss, der durch generalisierte Kräfte Qⱼ .= B_{η,ij}(q̇, q) beschrieben werden kann. Entsprechendes gilt für Kraft- bzw. Momentenstörungen (zᵢ) mit den Wirkungsfaktoren E_{η,ij}(q̇, q). Die zweite Ableitung der modalen Amplitude η_{ï} ist mit der inversen modalen Massenmatrix µ⁻¹(ij) proportional zur generalisierten Kraft Qⱼ. Die Strukturdämpfung ruft Dämpfungskräfte hervor, die mit Dämpfungsfaktoren β proportional zur Änderungsgeschwindigkeit der modalen Amplituden η̇ᵢ sind. Die Strukturelastizität ruft Federkräfte hervor, die mit der generalisierten Steifigkeitsmatrix γ proportional zu den modalen Amplituden sind.

Es ist eine Kopplung zwischen Struktur- und Starrkörperbewegung durch äußere Kräfte gegeben. Hierbei sind die äußeren Kräfte (aerodynamische Kräfte / Momente) abhängig von Starrkörperzuständen ẋ und x und Strukturdynamikzuständen η̇ und η. Äußere Kräfte beeinflussen sowohl die Starrkörperbewegung (ẍ) als auch die Strukturdynamik (η̈). Der Einfluss des starrkörperbewegungsabhängigen Anteils der Kräfte auf die Starrkörperbewegung ist bereits durch D, C berücksichtigt. Der Einfluss des strukturdeformationsbedingten Anteils der Kräfte auf die Strukturdynamik (Q_{η} und Q_{η̇}) ist (im Unterschied dazu) nicht bereits in β, γ enthalten. Über die Abhängigkeit der Kräfte von der Starrkörperbewegung ist ein Einfluss auf die Strukturdynamik gegeben: Qₓ, Q_{ẋ}. Die äußeren Regelschleifen beziehen sich auf die generalisierten Koordinaten (q = [xᵢ, ηᵢ]^{T}), die inneren Regelschleifen auf die lokalen Freiheitsgrade (R_{f}). Das Systemverhalten ist abhängig von der Beschreibungsform (Transformation zwischen verschiedenen Freiheitsgradsystemen / Zustandsdarstellungen).

Ein Spezialfall des Konzepts gemäß der Fig. 7 bezieht sich auf eine lokale Beschleunigungsrückführung. Hierbei erfolgt die Beschleunigungsmessung direkt am Ort der Stellfläche. Die Rückführmatrix K_{R} ist nur diagonal besetzt, das heißt die Beschleunigung wirkt sich ausschließlich auf die Stellfläche aus, an der gemessen wird. Die Systemdynamik kann frei vorgegeben werden, sofern die Anzahl der Stell- / Messpositionen der Anzahl der (berücksichtigten) Freiheitsgrade gleicht (und geeignet gewählt, das heißt linear unabhängig sind; hieraus folgt Steuerbarkeit und Beobachtbarkeit). Eine vollständige Eigenstrukturvorgabe ist hingegen nicht möglich. Das System bleibt gekoppelt. Unter der Annahme, dass das Stellratenkommando verzögerungsfrei umgesetzt wird (Vernachlässigung der Aktuatordynamik) ist die Rückführung der Beschleunigung auf die Stellrate äquivalent zur Rückführung der Geschwindigkeit auf die Stellposition. Unter der Annahme, dass die aerodynamische Krafterzeugung durch die Stellfläche verzögerungsfrei erfolgt (Vernachlässigung instationärer Aerodynamik), wird eine geschwindigkeitsproportionale Gegenkraftkraft erzeugt. Die Beschleunigungsrückführung entspricht somit einem virtuellen viskosen Dämpfer, der am Ort der Stellfläche angreift. Durch Einführung eines Integralteils oder Rückführung einer lokalen Geschwindigkeitsmessung ließe sich analog ein virtuelles Federelement darstellen, so dass sich eine mehr oder weniger steife Einspannung der Tragfläche am Ort der Stellflache ergibt. Das die Dämpfungskraft der Bewegungsrichtung stets entgegenwirkt, ist eine Energiezufuhr und damit eine Destabilisierung der strukturdynamischen Moden ausgeschlossen. Dies gilt jedoch nur, solange die Annahmen gerechtfertigt sind, das heißt für alle Strukturmoden, die deutlich niederfrequenter sind, als die Aktuatordynamik / die instationäre Aerodynamik sind. Das beschränkt die maximal realisierbare Dynamik der Beschleunigungsrückführung.

Im Gegensatz hierzu besteht bei örtlich von der Stellfläche getrennter Beschleunigungsmessung (z. B. IMU im Cockpit) die Gefahr einer Anregung, da das Beschleunigungssignal erst durch die Strukturdynamik verzögert auf die an der Stellfläche generierte Kraft reagiert. Anders ausgedrückt ist es möglich, dass eine Eigenform existiert, deren Schwingungsbauch am Ort der Messung ein zu dem Ort der Krafterzeugung (Stellfläche) entgegengesetztes Vorzeichen aufweist. Im Frequenzbereich dieses Eigenmodes ergibt sich folglich eine negative, destabilisierende Dämpfungskraft. Dies ist ausgeschlossen, wenn die Messung direkt am Ort der Krafterzeugung erfolgt.

Bei der klassischen Flugregelung ergibt sich die Beschränkung der Bandbreite aus der Frequenztrennung zur Strukturdynamik. Hingegen ergibt sich bei der lokalen Beschleunigungsrückführung eine Beschränkung der Bandbreite aus der Frequenztrennung zu instationärer Aerodynamik und Aktuatordynamik.

Vorteile des beschleunigungsgeregelten Konzepts können insbesondere in der Erreichbarkeit einer höheren Dynamik der Flugregelung und somit besserer Störunterdrückung, Flugruhe und höherer Agilität liegen, insbesondere bei hochelastischen Flugzeugen, wobei keine Frequenztrennung zur Strukturdynamik oder Filterung elastischer Moden erforderlich ist. Es kann eine automatische Dämpfung aller elastischen Moden unterhalb der Aktuatordynamik und insbesondere der Aerodynamik ermöglicht sein, unabhängig von den konkreten elastischen Eigenschaften des Flugzeugs. Ein Ausgleich von Störeinflüssen (lokale Böen) erfolgt direkt am Angriffsort, ohne die Strukturdynamik anzuregen (ähnlich einem Vogel, der nur lokal die Federn spreizt um einer Böe nachzugeben). Strukturlasten werden reduziert. Die Beschleunigungsmessung und -regelung kann in ein eine Aktuatorsteuerung integriert werden (smart actuator). Dies ermöglicht einen dezentralen Systemaufbau. Das beschleunigungsgeregelten Konzept ermöglicht neue Redundanzkonzepte und erlaubt eine einfache Adaption der Regelgesetze bei Stellflächenausfall. Bei ausreichender Frequenztrennung zwischen Beschleunigungsregelung (dezentral im Aktuator) und Lageregelung (zentral im FCC) können die Lageregelung und alle übergeordneten Regelschleifen unverändert bleiben, da auch reduzierte Dynamik der Beschleunigungsregelung noch ausreichend schnell ist. Dies entspricht der Tatsache, dass bei klassischer Flugregelung der Ausfall eines redundanten Aktuators für dieselbe Stellfläche in der Regel keine Adaption der FCL erfordert.

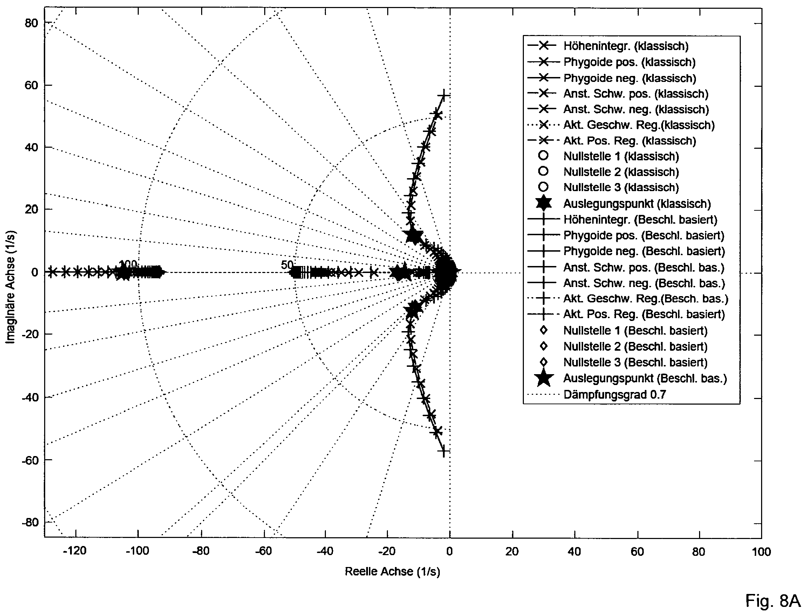

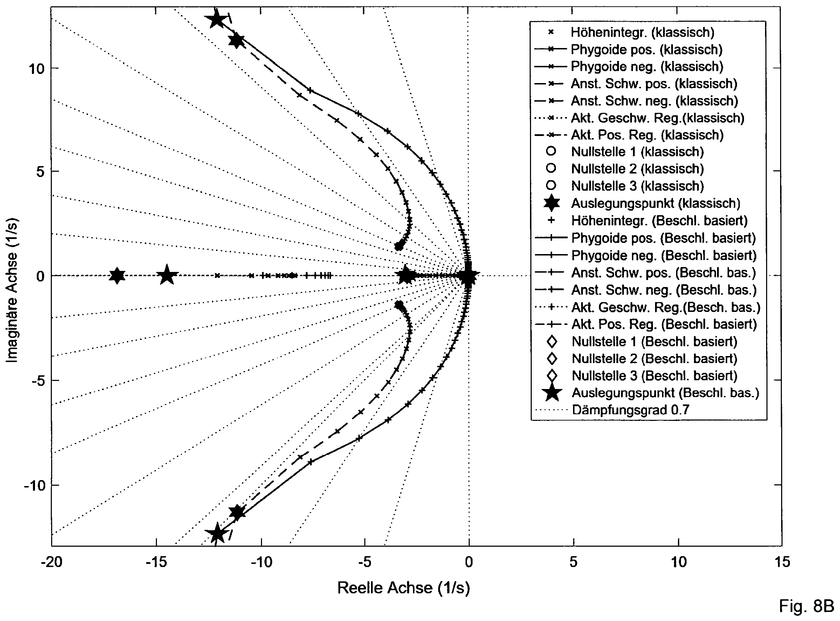

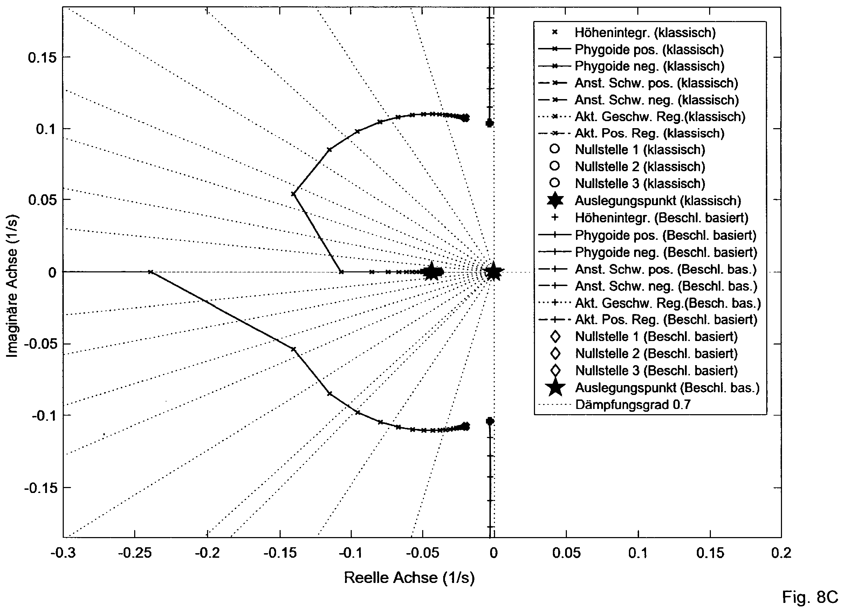

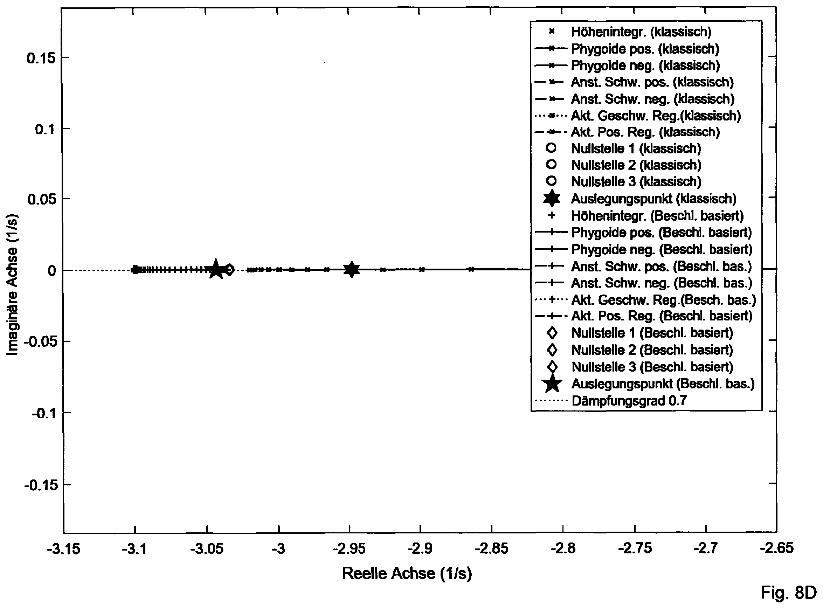

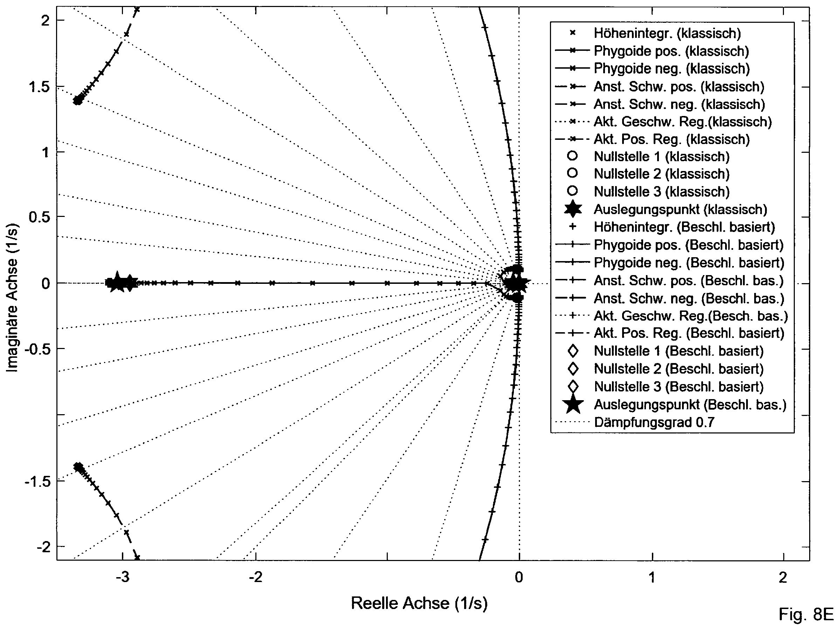

Die Figuren 8A bis 8E zeigen die Gesamt-Systemdynamik in der komplexen Ebene einer beispielhaften Ausführungsform der Anordnung, welche sich aus der Übertragung der in Fig.5 dargestellten Struktur auf den Nickfreiheitsgrad ergeben kann. Hierbei zeigt die Fig. 8B einen vergrößerten Ausschnitt der Fig. 8A, die Fig. 8C einen vergrößerten Ausschnitt der Fig. 8B, die Fig. 8D einen vergrößerten Ausschnitt der Fig. 8C und die Fig. 8E einen vergrößerten Ausschnitt der Fig. 8D. Die Darstellung der Figuren 8A bis 8E basiert auf einer offenbarungsgemäße Vorrichtung für die Regelung des Höhenleitwerks. Es erfolgt eine Rückführung der Längslage θ und der Nickrate q. Gezeigt ist die Pol- und Nullstellen-Verteilung, die sich für die dargestellte Ausführungsform für unterschiedliche Rückführungsverstärkungen ergibt (+-förmige Markierungen). Zum Vergleich ist zusätzlich die Pol- und Nullstellen Verteilung dargestellt, die sich für eine vorbekannte Regelung ergibt, bei der durch die Stellsystemregelung der Stellwinkel des Höhenruders geregelt wird (x-förmige Markierungen). Die größer dargestellten x- bzw. +-Markierungen kennzeichnen die Pollagen, die sich ergeben, wenn beide Rückführungsverstärkungen (für q und θ) den Wert null annehmen. Für die vorbekannte Regelung (x) entspricht diese Polverteilung einem für ungeregelte Flugzeuge bekannten Muster, bei dem ein konjugiert komplexes Polpaar der Phygoidbewegung und eines der Anstellwinkelschwingung zuzuordnen ist. Durch die Rückführung der lokalen Beschleunigung im Rahmen der offenbarungsgemäßen Ausführungsform wird die Anstellwinkelschwingung stark gedämpft und in zwei reele Pole aufgespalten. Die Phygoidpole werden dadurch hingegen kaum beeinflusst.

Die durch Linien verbundenen kleiner dargestellten Markierungen kennzeichnen Pollagen, die sich bei einer gleichzeitigen Erhöhung der Rückführungsverstärkungen für die Nickrate und die Längslage in einem konstanten Verhältnis ergeben können. Die sternförmigen Markierungen kennzeichnen Pollagen, die sich für eine vorteilhafte Wahl der Rückführungsverstärkungen ergeben können, wenn eine hohe Bandbreite des Regelkreises bei einem den Wert 0,7 nicht unterschreitenden Dämpfungsgrad angestrebt wird.

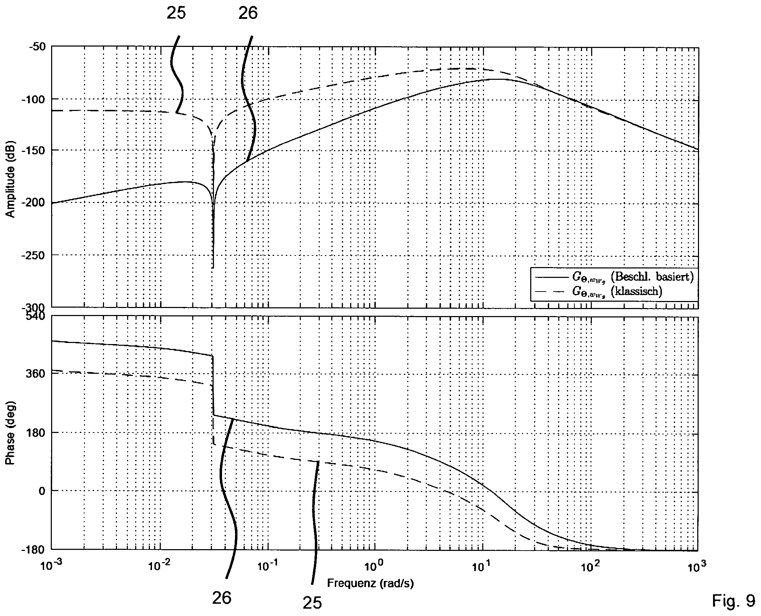

Die Fig. 9 zeigt ein Bode-Diagramm für eine vorbekannte 25 und für die offenbarungsgemäße 26 Ausführungsform gemäß der Figuren 8A bis 8E dar, welche sich für eine jeweils vorteilhafte Wahl der Rückführungsverstärkungen ergeben können. Dargestellt ist der Frequenzgang einer Störübertragungsfunktion von der vertikalen Windgeschwindigkeit w_{wg} (Böe) auf die Längslage θ. In einem Frequenzbereich unterhalb der Dynamik der Stellsystemregelung zeigt die offenbarungsgemäße Ausführungsform 26 (durchgezogene Linie) ein verbessertes Störverhalten, da die Übertragungsfunktion der vorbekannten Anordnung 25 (unterbrochene Linie) eine zusätzliche Nullstelle aufweist, die den mit der Positionsregelschleife der Servoregelung assoziierten Pol nahezu kompensiert. Diese Nullstelle wird durch die Beschleunigungsrückführung eliminiert.

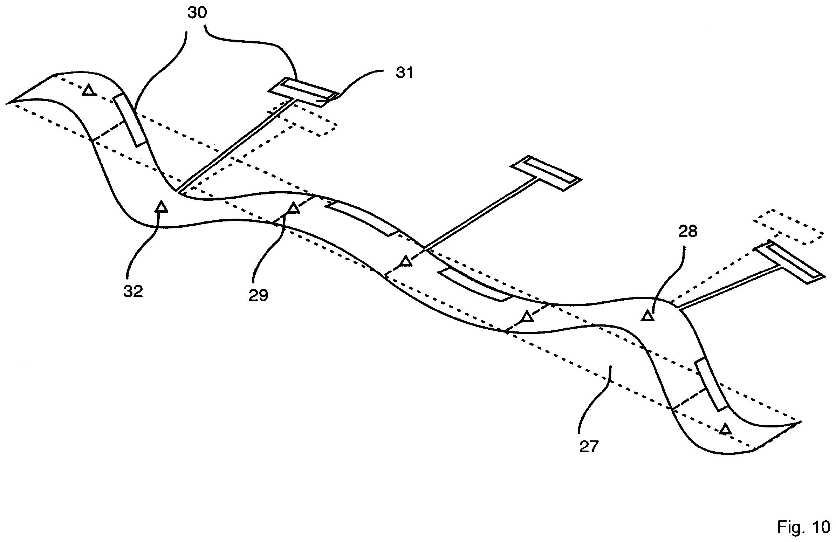

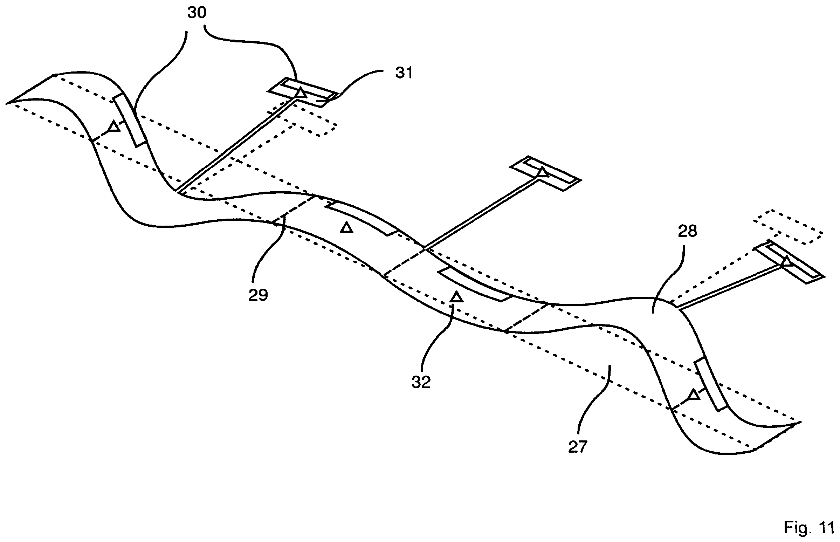

Die Fig. 10 illustriert eine beispielhafte Ausführungsform für ein flexibles Flugzeug. Ohne die Allgemeinheit einzuschränken, ist die Darstellung der Fig. 11 hierbei auf die Flexibilität des Hauptflügels bezüglich einer Biegung um die Längsachse, eine Torsion um die Querachse sowie die daraus resultierenden lokalen Vertikalbewegungen beschränkt. Ein flexibles Flugzeug verfügt zusätzlich zu den sechs Freiheitsgraden eines starren Körpers über weitere Freiheitsgrade, die den Verformungszustand beschreiben. Eine übliche Darstellungsform umfasst neben den Starrkörperfreiheitsgraden einer unverformten Referenzkonfiguration 27 die Amplituden von überlagerten Eigenformen der elastischen Moden, welche charakteristische Verformungsmuster gegenüber der Referenzkonfiguration beschreiben. Eine solche Eigenform ist beispielhaft in der Fig. 10 dargestellt. Dabei kann die Eigenform lokale Extrempunkte 28 aufweisen, an denen die Abweichungen von der Referenzkonfiguration am größten sind, und Knotenpunkte 29 aufweisen, an denen die Abweichungen zur Referenzkonfiguration verschwinden. Ein flexibles Flugzeug kann zur Steuerung und Stabilisierung der Verformungsfreiheitsgrade über mehrere Stellsysteme (Leitwerke) verfügen, welche durch Stellflächen 30 und gegebenenfalls Flossen 31 gebildet sei können. Eine offenbarungsgemäße Vorrichtung kann zur Regelung eine oder mehrere Ist-Beschleunigungen an beliebigen Punkten 32 des Flugzeugs verwenden. In einer vorteilhaften Ausführungsform können dies beispielsweise Extrempunkte oder Knotenpunkte einer oder mehrerer Eigenformen sein, oder aber Punkte, an denen keine der für die Regelung relevanten Eigenformen einen Knotenpunkt aufweist. Insbesondere kann die Anzahl der verwendeten Beschleunigungen einer Anzahl an Eigenwerten entsprechen, die durch die Regelung stabilisiert oder beeinflusst werden sollen. Dabei können beispielsweise alle Beschleunigungen von jeder der bereitgestellten Vorrichtungen empfangen werden. Alternativ können von einer Vorrichtung nur jene Beschleunigungen empfangen werden, die durch eine Verstellung des von der Vorrichtung geregelten Stellsystems beeinflusst werden können.

In der Fig. 11 ist eine Ausführung einer Anordnung für ein flexibles Flugzeug gezeigt, bei der die Punkte 32 des Flugzeuges, an denen die lokale Beschleunigung zur Regelung der Stellsysteme verwendet wird, in der Nähe der Stellflächen 30 liegen. Dabei können beispielsweise wiederum alle Beschleunigungen von allen offenbarungsgemäßen Vorrichtungen empfangen werden. Alternativ kann von jeder Vorrichtung jeweils nur jene Beschleunigung empfangen werden, welche in der Nähe des von dieser Vorrichtung geregelten Stellsystems vorliegt.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Vorrichtung (12) für die Steuerung und Regelung eines Stellsystems (4) eines Flugzeugs, mit
- einer ersten Eingangsschnittstelle, welche eingerichtet ist, eine Führungsgröße (13) angebende erste Eingangsdaten zu empfangen;
- einer zweiten Eingangsschnittstelle, welche eingerichtet ist, eine Regelgröße (14) angebende zweite Eingangsdaten zu empfangen; und
- einem Steuerausgang, welcher eingerichtet ist ein Steuersignal auszugeben,
**dadurch gekennzeichnet, dass** das Steuersignal eine Stellgröße (8) für ein Stellsystems (4) eines Flugzeugs angibt, welches mittels des Stellsystems (4) zu steuern ist,
wobei
- die Führungsgröße (13) eine Soll-Beschleunigung an einem Punkt (32) des Flugzeugs angibt, welches mittels des Stellsystems (4) zu steuern ist;
- die Regelgröße (14) eine Ist-Beschleunigung des Flugzeugs an dem Punkt (32) angibt; und
- die Vorrichtung (12) eingerichtet ist, unter Berücksichtigung der Führungsgröße (13) und der Regelgröße (14), insbesondere aus der Differenz zwischen der Führungsgröße (13) und der Regelgröße (14), die Stellgröße (8) zu bestimmen und das der Stellgröße (8) entsprechende Steuersignal über den Steuerausgang auszugeben.

2. Vorrichtung (12) nach Anspruch 1, mit einer dritten Eingangsschnittstelle, welche eingerichtet ist, eine Stellsystem-Regelgröße (7) angebende dritte Eingangsdaten zu empfangen, wobei die Vorrichtung (12) eingerichtet ist,
- unter Berücksichtigung der Führungsgröße (13) und der Regelgröße (14) eine Stellsystem-Führungsgröße zu bestimmen und
- unter Berücksichtigung der Stellsystem-Führungsgröße und der Stellsystem-Regelgröße (7) die Stellgröße (8) zu bestimmen.

3. Vorrichtung (12) nach Anspruch 2, wobei die Stellsystem-Führungsgröße eine Soll-Stellgeschwindigkeit des Stellsystems (4) ist und die Stellsystem-Regelgröße (7) eine Ist-Stellgeschwindigkeit des Stellsystems (4) ist.

4. Vorrichtung (12) nach mindestens einem der vorangehenden Ansprüche, wobei die Vorrichtung (12) eingerichtet ist, die Stellgröße (8) frei von einer Berücksichtigung einer Ist-Stellposition des Stellsystems (4) und frei von einem Bestimmen einer Soll-Stellposition des Stellsystems (4) zu bestimmen.

5. Vorrichtung (12) nach mindestens einem der vorangehenden Ansprüche, mit einer weiteren Eingangsschnittstelle, welche eingerichtet ist, eine weitere Regelgröße angebende weitere Eingangsdaten zu empfangen, wobei
- die weitere Regelgröße eine Ist-Beschleunigung des Flugzeugs an einem weiteren Punkt (32) angibt; und
- die Vorrichtung (12) eingerichtet ist, die Regelgröße (14) unter Berücksichtigung der weiteren Regelgröße anzupassen und anschließend die Stellgröße (8) unter Berücksichtigung der Führungsgröße (13) und der Regelgröße (14) zu bestimmen.

6. Anordnung für die Steuerung und Regelung eines Stellsystems (4) eines Flugzeugs, mit
- einem Flugzeug, aufweisend
- ein Stellsystem (4), welches eingerichtet ist, das Flugzeug in wenigstens einem Freiheitsgrad zu steuern, und
- einen Beschleunigungssensor (15), welcher an einem Punkt (32) des Flugzeugs angeordnet ist;
- einer Flugregelungs-Vorrichtung (1) mit einer Ausgangsschnittstelle; und
- einer Vorrichtung (12) nach mindestens einem der vorangehenden Ansprüche,
wobei
- die Flugregelungs-Vorrichtung (1) eingerichtet ist, aus einem Flugzustand des Flugzeugs die Führungsgröße (13) zu berechnen, welche eine Soll-Beschleunigung an dem Punkt (32) des Flugzeugs angibt, und über die Ausgangsschnittstelle die Führungsgröße (13) angebende erste Eingangsdaten an die erste Eingangsschnittstelle der Vorrichtung (12) zu senden;
- der Beschleunigungssensor (15) eingerichtet ist, die lokale Beschleunigung des Flugzeugs an dem Punkt (32) zu messen und die Regelgröße (14) angebende zweite Eingangsdaten an die zweite Eingangsschnittstelle der Vorrichtung (12) zu senden, welche die lokale Beschleunigung an dem Punkt (32) angeben; und
- das Stellsystem (4) eingerichtet ist, die Stellgröße (8) von dem Steuerausgang der Vorrichtung (12) zu empfangen und eine der Stellgröße (8) entsprechende Stellbewegung auszuführen.

7. Anordnung nach Anspruch 6, wobei die Flugregelungs-Vorrichtung (1) eingerichtet ist, die Führungsgröße (13) unter Berücksichtigung einer direkt kinematisch aus einer Soll-Trajektorie des Flugzeugs bestimmten Steuergröße zu berechnen.

8. Anordnung nach Anspruch 6 oder 7, wobei das Stellsystem (4) mit einem Aktuator gebildet ist, welcher eine Stellfläche (30) eines Leitwerks (16) des Flugzeugs bewegt.

9. Anordnung nach Anspruch 8, wobei der Beschleunigungssensor (15) an einem relativ zu dem Flugzeug unbeweglichen Teil des Leitwerks (16) angeordnet ist.

10. Anordnung nach mindestens einem der Ansprüche 6 bis 9, mit einem weiteren Beschleunigungssensor (15), welcher an einem weiteren Punkt (32) des Flugzeugs angeordnet ist, wobei
- die Vorrichtung (12) eine Vorrichtung (12) nach dem Anspruch 5 ist; und
- der weitere Beschleunigungssensor (15) eingerichtet ist, die lokale Beschleunigung an dem weiteren Punkt (32) zu messen und die weitere Regelgröße (14) angebende weitere Eingangsdaten an die weitere Eingangsschnittstelle der Vorrichtung (12) zu senden, welche die lokale Beschleunigung an dem weiteren Punkt (32) angeben.

11. Anordnung nach mindestens einem der Ansprüche 6 bis 10, mit einer weiteren Vorrichtung (12) nach mindestens einem der Ansprüche 1 bis 5, wobei das Flugzeug ein weiteres Stellsystem (4), welches eingerichtet ist, das Flugzeug in dem wenigstens einen Freiheitsgrad oder in wenigstens einem weiteren Freiheitsgrad zu steuern, und einen zusätzlichen Beschleunigungssensor (15) aufweist, welcher an einem zusätzlichen Punkt (32) des Flugzeugs angeordnet ist, wobei
- die Flugregelungs-Vorrichtung (1) eingerichtet ist, über die Ausgangsschnittstelle die die Führungsgröße (13) angebenden ersten Eingangsdaten zusätzlich an die weitere Vorrichtung (12) zu senden;
- der zusätzliche Beschleunigungssensor (15) eingerichtet ist, die lokale Beschleunigung des Flugzeugs an dem zusätzlichen Punkt (32) zu messen und eine zusätzliche Regelgröße (14) angebende zweite Eingangsdaten an die weitere Vorrichtung (12) zu senden, welche die lokale Beschleunigung an dem zusätzlichen Punkt (32) angeben; und
- das weitere Stellsystem (4) eingerichtet ist, die Stellgröße (8) von dem Steuerausgang der weiteren Vorrichtung (12) zu empfangen und eine dieser Stellgröße (8) entsprechende Stellbewegung auszuführen.

12. Verfahren zur Steuerung und Regelung eines Stellsystems (4) eines Flugzeugs, mit den Schritten
- Bereitstellen einer Vorrichtung (12) für die Steuerung und Regelung eines Stellsystems (4) eines Flugzeugs;
**gekennzeichnet durch**:
- Erzeugen von eine Führungsgröße (13) angebenden ersten Eingangsdaten, wobei die Führungsgröße (13) eine Soll-Beschleunigung an einem Punkt (32) des Flugzeugs angibt, welches mittels des Stellsystems (4) zu steuern ist;
- Erzeugen von eine Regelgröße (14) angebenden zweiten Eingangsdaten, wobei die Regelgröße (14) eine Ist-Beschleunigung des Flugzeugs an dem Punkt (32) angibt;
- Empfangen der ersten Eingangsdaten an einer ersten Eingangsschnittstelle der Vorrichtung (12);
- Empfangen der zweiten Eingangsdaten an einer zweiten Eingangsschnittstelle der Vorrichtung (12);
- Bestimmen einer Stellgröße (8) für ein Stellsystem (4) des Flugzeugs unter Berücksichtigung der Führungsgröße (13) und der Regelgröße (14), insbesondere aus der Differenz zwischen der Führungsgröße (13) und der Regelgröße (14); und
- Ausgeben eines die Stellgröße (8) angebenden Steuersignals über einen Steuerausgang der Vorrichtung (12).

13. Verfahren nach Anspruch 12, umfassend das Empfangen von eine Stellsystem-Regelgröße (7) angebenden dritten Eingangsdaten an einer dritten Eingangsschnittstelle der Vorrichtung (12), wobei das Bestimmen der Stellgröße (8) unter Berücksichtigung der Führungsgröße (13) und der Regelgröße (14) das Bestimmen einer Stellsystem-Führungsgröße unter Berücksichtigung der Führungsgröße (13) und der Regelgröße (14) und das Bestimmen der Stellgröße (8) unter Berücksichtigung der Stellsystem-Führungsgröße und der Stellsystem-Regelgröße (7) umfasst.

## Claims

1. Apparatus (12) for the control and closed-loop control of an actuation system (4) of an aircraft, with
- a first input interface, which is configured to receive first input data specifying a reference variable (13);
- a second input interface, which is configured to receive second input data specifying a controlled variable (14); and
- a control output, which is configured to output a control signal,
**characterised in that**, the control signal specifies a manipulated variable (8) for an actuation system (4) of an aircraft, which is to be controlled by means of the actuation system (4),
wherein
- the reference variable (13) specifies a target acceleration at a point (32) of the aircraft, which is to be controlled by means of the actuation system (4);
- the controlled variable (14) specifies an actual acceleration of the aircraft at the point (32); and
- the apparatus (12) is configured to determine the manipulated variable (8), taking into account the reference variable (13) and the controlled variable (14), in particular from the difference between the reference variable (13) and the controlled variable (14), and to output the control signal corresponding to the manipulated variable (8) via the control output.

2. Apparatus (12) in accordance with Claim 1, with a third input interface that is configured to receive third input data specifying an actuation system-controlled variable (7), wherein the apparatus (12) is configured:
- to determine an actuation system-reference variable, taking into account the reference variable (13) and the controlled variable (14), and
- to determine the manipulated variable (8), taking into account the actuation system-reference variable and the actuation system-controlled variable (7).

3. Apparatus (12) in accordance with Claim 2, wherein the actuation system-reference variable is a target positioning speed of the actuation system (4), and the actuation system-controlled variable (7) is an actual positioning speed of the actuation system (4).

4. Apparatus (12) in accordance with at least one of the preceding claims, wherein the apparatus (12) is configured to determine the manipulated variable (8) without considering an actual actuation position of the actuation system (4), and without determining a target actuation position of the actuation system (4).

5. Apparatus (12) in accordance with at least one of the preceding claims, with a further input interface, which is configured to receive further input data specifying a further controlled variable, wherein
- the further controlled variable specifies an actual acceleration of the aircraft at a further point (32); and
- the apparatus (12) is configured to adjust the controlled variable (14), taking into account the further controlled variable, and subsequently to determine the manipulated variable (8), taking into account the reference variable (13) and the controlled variable (14).

6. Arrangement for the control and closed-loop control of an actuation system (4) of an aircraft, with
- an aircraft, comprising
- an actuation system (4), which is configured to control the aircraft in at least one degree of freedom, and
- an acceleration sensor (15), which is arranged at a point (32) of the aircraft;
- a flight control apparatus (1) with an output interface; and
- an apparatus (12) in accordance with at least one of the preceding claims,
wherein
- the flight control apparatus (1) is configured to calculate, from a flight state of the aircraft, the reference variable (13), which specifies a target acceleration at the point (32) of the aircraft, and, via the output interface, to transmit first input data, specifying the reference variable (13), to the first input interface of the apparatus (12);
- the acceleration sensor (15) is configured to measure the local acceleration of the aircraft at the point (32), and to transmit second input data, specifying the controlled variable (14), to the second input interface of the apparatus (12), which data specify the local acceleration at the point (32); and
- the actuation system (4) is configured to receive the manipulated variable (8) from the control output of the apparatus (12), and to execute a positioning movement corresponding to the manipulated variable (8).

7. Arrangement in accordance with Claim 6, wherein the flight control apparatus (1) is configured to calculate the reference variable (13) taking into account an actuating variable determined in a directly kinematic manner from a target trajectory of the aircraft.

8. Arrangement in accordance with Claim 6 or 7, wherein the actuation system (4) is formed with an actuator, which moves a flight control surface (30) of a flight control surface assembly (16) of the aircraft.

9. Arrangement in accordance with Claim 8, wherein the acceleration sensor (15) is arranged on a part of the flight control surface assembly (16) that is immovable relative to the aircraft.

10. Arrangement in accordance with at least one of the Claims 6 to 9, with a further acceleration sensor (15), which is arranged at a further point (32) of the aircraft, wherein
- the apparatus (12) is an apparatus (12) in accordance with Claim 5; and
- the further acceleration sensor (15) is configured to measure the local acceleration at the further point (32), and to transmit further input data specifying the further controlled variable (14) to the further input interface of the apparatus (12), which data specify the local acceleration at the further point (32).

11. Arrangement in accordance with at least one of the Claims 6 to 10, with a further apparatus (12) in accordance with at least one of the Claims 1 to 5, wherein the aircraft has a further actuation system (4), which is configured to control the aircraft in the at least one degree of freedom, or in at least one further degree of freedom, and an additional acceleration sensor (15), which is arranged at an additional point (32) of the aircraft, wherein
- the flight control apparatus (1) is configured to additionally transmit the first input data specifying the reference variable (13) to the further apparatus (12) via the output interface;
- the additional acceleration sensor (15) is configured to measure the local acceleration of the aircraft at the additional point (32), and to transmit second input data specifying an additional controlled variable (14) to the further apparatus (12), which data specify the local acceleration at the additional point (32); and
- the further actuation system (4) is configured to receive the manipulated variable (8) from the control output of the further apparatus (12), and to execute a positioning movement corresponding to this manipulated variable (8).

12. Method for the control and closed-loop control of an actuation system (4) of an aircraft, with the steps:
- Provision of an apparatus (12) for the control and closed-loop control of an actuation system (4) of an aircraft;
**characterised by**:
- Generation of first input data specifying a reference variable (13), wherein the reference variable (13) specifies a target acceleration at a point (32) of the aircraft, which is to be controlled by means of the actuation system (4);
- Generation of second input data specifying a controlled variable (14), wherein the controlled variable (14) specifies an actual acceleration of the aircraft at the point (32);
- Reception of the first input data at a first input interface of the apparatus (12);
- Reception of the second input data at a second input interface of the apparatus (12);
- Determination of a manipulated variable (8) for an actuation system (4) of the aircraft, taking into account the reference variable (13) and the controlled variable (14), in particular from the difference between the reference variable (13) and the controlled variable (14); and
- Output of a control signal specifying the manipulated variable (8) via a control output of the apparatus (12).

13. Method in accordance with Claim 12, comprising the reception of third input data specifying an actuation system-controlled variable (7) at a third input interface of the apparatus (12), wherein the determination of the manipulated variable (8), taking into account the reference variable (13) and the controlled variable (14), comprises the determination of an actuation system-reference variable, taking into account the reference variable (13) and the controlled variable (14), and the determination of the manipulated variable (8), taking into account the actuation system-reference variable and the actuation system-controlled variable (7).

## Revendications

1. Dispositif (12) de commande et de contrôle d'un système d'actionnement (4) d'aéronef, comprenant :
- une première interface d'entrée qui est conçue pour recevoir des premières données d'entrée fournissant une grandeur de guidage (13),
- une deuxième interface d'entrée qui est conçue pour recevoir des deuxièmes données d'entrée fournissant une grandeur de contrôle (14) ; et
- une sortie de commande qui est conçue pour émettre un signal de commande,
**caractérisé en ce que** le signal de commande indique une grandeur d'actionnement (8) pour un système d'actionnement (4) d'un aéronef qui doit être commandé au moyen du système d'actionnement (4),
dans lequel
- la grandeur de guidage (13) indique une accélération de consigne en un point (32) de l'aéronef qui doit être commandé au moyen du système d'actionnement (4) ;
- la grandeur de contrôle (14) indique une accélération réelle de l'aéronef au point (32) ; et
- le dispositif (12) est conçu pour, en tenant compte de la grandeur de guidage (13) et de la grandeur de contrôle (14), déterminer la grandeur d'actionnement (8), en particulier à partir de la différence entre la grandeur de guidage (13) et la grandeur de contrôle (14) et émettre le signal de commande correspondant à la grandeur d'actionnement (8) par le biais de la sortie de commande.

2. Dispositif (12) selon la revendication 1, comprenant une troisième interface d'entrée, laquelle est conçue pour recevoir des troisièmes données d'entrée indiquant une grandeur de contrôle (7) de système d'actionnement, dans lequel le dispositif (12) est conçu
- pour déterminer une grandeur de guidage de système d'actionnement en tenant compte de la grandeur de guidage (13) et de la grandeur de contrôle (14) et
- pour déterminer la grandeur d'actionnement (8) en tenant compte de la grandeur de guidage de système d'actionnement et de la grandeur de contrôle (7) de système d'actionnement.

3. Dispositif (12) selon la revendication 2, dans lequel la grandeur de guidage de système d'actionnement est une vitesse d'actionnement de consigne du système d'actionnement (4) et la grandeur de contrôle (7) de système d'actionnement est une vitesse d'actionnement réelle du système d'actionnement (4).

4. Dispositif (12) selon au moins l'une des revendications précédentes, dans lequel le dispositif (12) est conçu pour déterminer la grandeur d'actionnement (8) sans tenir compte d'une position d'actionnement réelle du système d'actionnement (4) et sans déterminer une position d'actionnement de consigne du système d'actionnement (4).

5. Dispositif (12) selon au moins l'une des revendications précédentes, comprenant une interface d'entrée supplémentaire qui est conçue pour recevoir des données d'entrée supplémentaires indiquant une grandeur de contrôle supplémentaire, dans lequel
- la grandeur de contrôle supplémentaire indique une accélération réelle de l'aéronef en un point supplémentaire (32) ; et
- le dispositif (12) est conçu pour adapter la grandeur de contrôle (14) en tenant compte de la grandeur de contrôle supplémentaire et enfin pour déterminer la grandeur d'actionnement (8) en tenant compte de la grandeur de guidage (13) et de la grandeur de contrôle (14).

6. Agencement de commande et de contrôle d'un système d'actionnement (4) d'aéronef, comprenant :
- un aéronef, présentant :
- un système d'actionnement (4) qui est conçu pour commander l'aéronef dans au moins un degré de liberté, et
- un capteur d'accélération (15) qui est disposé en un point (32) de l'aéronef ;
- un dispositif de contrôle de vol (1) comprenant une interface de sortie ; et
- un dispositif (12) selon au moins l'une des revendications précédentes,
dans lequel
- le dispositif de contrôle de vol (1) est conçu pour calculer la grandeur de guidage (13) à partir d'un état de vol de l'aéronef, laquelle indique une accélération de consigne au point (32) de l'aéronef, et pour envoyer, par l'interface de sortie, des premières données d'entrée indiquant la grandeur de guidage (13) à la première interface d'entrée du dispositif (12) ;
- le capteur d'accélération (15) est conçu pour mesurer l'accélération locale de l'aéronef au point (32) et envoyer des deuxièmes données d'entrée indiquant la grandeur de contrôle (14) à la deuxième interface d'entrée du dispositif (12), lesquelles indiquent l'accélération locale au point (32) ; et
- le système d'actionnement (4) est conçu pour recevoir la grandeur d'actionnement (8) de la sortie de commande du dispositif (12) et exécuter un mouvement d'actionnement correspondant à la grandeur d'actionnement (8).

7. Agencement selon la revendication 6, dans lequel le dispositif de contrôle de vol (1) est conçu pour calculer la grandeur de guidage (13) en tenant compte d'une grandeur de commande déterminée directement de manière cinématique à partir d'une trajectoire de consigne de l'aéronef.

8. Agencement selon la revendication 6 ou 7, dans lequel le système d'actionnement (4) est conçu avec un actionneur qui déplace une face d'actionnement (30) d'un empennage (16) de l'aéronef.

9. Agencement selon la revendication 8, dans lequel le capteur d'accélération (15) est disposé sur une partie de l'empennage (16) fixe par rapport à l'aéronef.

10. Agencement selon au moins l'une des revendications 6 à 9, comprenant un capteur d'accélération (15) supplémentaire qui est disposé en un point supplémentaire (32) de l'aéronef, dans lequel
- le dispositif (12) est un dispositif (12) selon la revendication 5 ; et
- le capteur d'accélération supplémentaire (15) est conçu pour mesurer l'accélération locale au point supplémentaire (32) et envoyer des données d'entrée supplémentaires indiquant la grandeur de contrôle supplémentaire (14) à l'interface d'entrée supplémentaire du dispositif (12), lesquelles indiquent l'accélération locale au point supplémentaire (32).

11. Agencement selon au moins l'une des revendications 6 à 10, comprenant un dispositif supplémentaire (12) selon au moins l'une des revendications 1 à 5, dans lequel l'aéronef présente un système d'actionnement supplémentaire (4) qui est conçu pour commander l'aéronef dans l'au moins un degré de liberté ou dans au moins un degré de liberté supplémentaire, et un capteur d'accélération supplémentaire (15) qui est disposé en un point supplémentaire (32) de l'aéronef, dans lequel
- le dispositif de contrôle de vol (1) est conçu pour envoyer, par le biais de l'interface de sortie, les premières données d'entrée indiquant la grandeur de guidage (13) au dispositif supplémentaire (12) ;
- le capteur d'accélération supplémentaire (15) est conçu pour mesurer l'accélération locale de l'aéronef au point supplémentaire (32) et envoyer des deuxièmes données indiquant une grandeur de contrôle supplémentaire (14) au dispositif supplémentaire (12), lesquelles indiquent l'accélération locale au point supplémentaire (32) ; et
- le système d'actionnement supplémentaire (4) est conçu pour recevoir la grandeur d'actionnement (8) de la sortie de commande du dispositif supplémentaire (12) et exécuter un mouvement d'actionnement correspondant à cette grandeur d'actionnement (8).

12. Procédé de commande et de contrôle d'un système d'actionnement (4) d'aéronef, comprenant les étapes :
- de fournir un dispositif (12) de commande et de contrôle d'un système d'actionnement (4) d'aéronef ;
**caractérisé par** :
- la production de premières données d'entrée fournissant une grandeur de guidage (13), dans lequel la grandeur de guidage (13) indique une accélération de consigne en un point (32) de l'aéronef qui doit être commandé au moyen du système d'actionnement (4) ;
- la production de deuxièmes données d'entrée fournissant une grandeur de contrôle (14), dans lequel la grandeur de contrôle (14) indique une accélération réelle de l'aéronef au point (32) ;
- la réception des premières données d'entrée sur une première interface d'entrée du dispositif (12) ;
- la réception des deuxièmes données d'entrée sur une deuxième interface d'entrée du dispositif (12) ;
- la détermination d'une grandeur d'actionnement (8) pour un système d'actionnement (4) de l'aéronef en tenant compte de la grandeur de guidage (13) et de la grandeur de contrôle (14), en particulier à partir de la différence entre la grandeur de guidage (13) et la grandeur de contrôle (14) ; et
- l'émission d'un signal de commande indiquant la grandeur d'actionnement (8) par le biais d'une sortie de commande du dispositif (12).

13. Procédé selon la revendication 12, comprenant la réception de troisièmes données d'entrée indiquant une grandeur de contrôle (7) de système d'actionnement sur une troisième interface d'entrée du dispositif (12), dans lequel la détermination de la grandeur de guidage (8) en tenant compte de la grandeur de guidage (13) et de la grandeur de contrôle (14) comprend de déterminer une grandeur de guidage de système d'actionnement en tenant compte de la grandeur de guidage (13) et de la grandeur de contrôle (14) et de déterminer la grandeur d'actionnement (8) en tenant compte de la grandeur de guidage de système d'actionnement et de la grandeur de contrôle (7) de système d'actionnement.
